**Europäisches Patentamt**

**European Patent Office**

**Office européen des brevets**

(19)

(11) Veröffentlichungsnummer : **0 136 513
B1**

(12)

# EUROPÄISCHE PATENTSCHRIFT

(45) Veröffentlichungstag der Patentschrift :
20.01.88

(51) Int. Cl.⁴ : **B 23 K 11/06**

(21) Anmeldenummer : **84109997.1**

(22) Anmeldetag : **22.08.84**

(54) **Verfahren zum elektrischen Widerstandsrollennahtschweissen mit nur einem Elektrodendraht und Schweissmaschine zur Durchführung des Verfahrens sowie Anwendung des Verfahrens.**

(30) Priorität : **20.09.83 CH 5117/83**

(43) Veröffentlichungstag der Anmeldung :
**10.04.85 Patentblatt 85/15**

(45) Bekanntmachung des Hinweises auf die Patenterteilung : **20.01.88 Patentblatt 88/03**

(84) Benannte Vertragsstaaten :
**CH DE FR GB IT LI NL SE**

(56) Entgegenhaltungen :
**AT-B- 213 363
AT-B- 256 753
DD-A- 142 944
DE-A- 1 452 499
DE-A- 3 103 608**

(73) Patentinhaber : **ELPATRONIC AG
Baarerstrasse 117
CH-6300 Zug (CH)**

(72) Erfinder : **Opprecht, Paul
Herrenbergstrasse 10
CH-8962 Bergdietikon (CH)**
Erfinder : **Weil, Wolfgang
Hattsteinstrasse 3
D-7843 Heitersheim (DE)**

(74) Vertreter : **Hotz, Klaus, Dipl.-El.-Ing. / ETH
c/o SOUDRONIC AG Industriestrasse 35 Postfach 11
CH-8962 Bergdietikon (CH)**

## Beschreibung

Die Erfindung bezieht sich auf ein Verfahren zum elektrischen Widerstandsrollennahtschweissen mit Hilfe von nur einem Elektrodendraht, der von einem Drahtvorrat abgezogen wird und in einer Widerstandsrollennaht-Schweissmaschine zuerst über eine erste und dann über eine zweite von zwei gegeneinander pressbaren Elektrodenträgerrollen läuft und dessen Festigkeit zwecks Verhütung einer Bildung von Drahtschlaufen zwischen den beiden Elektrodenträgerrollen vor seinem Einlauf in die erste Elektrodenträgerrolle durch Kaltverformung erhöht wird und dessen Drahtquerschnitt vor seinem Einlauf in die erste Elektrodenträgerrolle in der Querschnittsfläche verringert und von einer im wesentlichen kreisrunden in eine flache Querschnittsform mit einer gegenüber dem Durchmesser des runden Drahtes grösseren Breite und geringeren Höhe des abgeflachten Drahtes überführt wird, sowie auf eine Schweissmaschine zur Durchführung dieses Verfahrens und auf eine besondere Anwendung bzw. einen besonderen Anwendungsbereich dieses Verfahrens.

Ein Verfahren dieser Art ist z. B. aus der CH-PS 536 163 bekannt. Mit diesem Verfahren wurde erstmals ein kontinuierliches Widerstandsrollennahtschweissen mit Hilfe von nur einem Elektrodendraht ermöglicht und damit die Grundlage für mit nur einem Elektrodendraht arbeitende Hochgeschwindigkeits-Schweissautomaten geschaffen, und zwar im Prinzip dadurch, dass durch die Kaltverformung des Elektrodendrahtes vor seinem Einlauf in die erste Elektrodenträgerrolle und die damit verbundene Festigkeitserhöhung des Elektrodendrahtes die vorher bei Verfahren zum Widerstandsrollennahtschweissen mit Hilfe von nur einem Elektrodendraht wie beispielsweise dem aus der DE-OS 15 65 803 bekannten Verfahren infolge eines Abwalzens des Elektrodendrahtes unter dem Pressdruck der ersten Elektrodenträgerrolle auftretende Schlaufenbildung in der Drahtschleife zwischen erster und zweiter Elektrodenträgerrolle verhindert wurde und infolgedessen die bei dem Verfahren nach der DE-OS 15 65 803 noch bestehende Notwendigkeit entfiel, den Schweissprozess jeweils nach kurzer Schweissdauer zum Herausziehen der während derselben gebildeten Schlaufe aus der besagten Drahtschleife zu unterbrechen.

Die besagte Kaltverformung kann nach der genannten CH-PS 536 163 (Sp. 1, Z. 41) entweder durch Walzen oder durch Ziehen erfolgen, wobei aus schweisstechnischen Gründen in jedem Fall eine möglichst grosse und somit flache Auflagefläche des kaltverformten Elektrodendrahtes auf dem Schweissgut erforderlich ist. Daraus ergibt sich die Forderung nach der eingangs genannten flachen Querschnittsform des kaltverformten Elektrodendrahtes (CH-PS 536 163, Sp. 2, Z. 39-43). Diese Forderung gilt nicht nur für die Kaltverformung durch Walzen, wo sich ja zwangsläufig mit dem Walzvorgang eine Abflachung des Drahtes ergibt, sondern auch für die Kaltverformung durch Ziehen (CH-PS 536 163, Sp. 2, Z. 5-10). Nun ist aber das Ziehen eines Runddrahtes auf eine flache Querschnittsform mit beträchtlichen Schwierigkeiten verbunden, die in der Natur eines Ziehvorganges begründet sind. Denn wenn man einen Draht auseinanderzieht, dann ergibt sich nach Ueberschreitung der Elastizitätsgrenze allmählich eine Einschnürung des Drahtes, und bei einem Runddraht ist diese Einschnürung zur Drahtachse rotationssymmetrisch, d. h. jeder Drahtquerschnitt im Einschnürungsbereich ist kreisförmig und hat einen geringeren Durchmesser als der Draht ausserhalb des Einschnürungsbereiches. Beim technischen Ziehvorgang mit Hilfe einer Ziehdüse wird nun im Prinzip diese natürliche Einschnürung eines über seine Elastizitätsgrenze hinaus zugbelasteten Drahtes zur Verringerung des Durchmessers des Drahtes benutzt, indem man eine Ziehdüse mit einer Düsenöffnung verwendet, deren Innenwand in ihrer Form etwa der Hüllfläche einer solchen natürlichen Einschnürung bei dem sich aus der gewünschten Durchmesserverringerung ergebenden Einschnürungsgrad entspricht, und den Draht durch diese Düsenöffnung hindurchzieht, wobei man sich den Effekt zunutze macht, dass die natürliche Einschnürung an jeder Stelle des zugbelasteten Drahtes und somit auch jeweils gerade an der sich momentan in der Ziehdüse befindlichen Drahtstelle auftreten kann. Da das technische Drahtziehen mit Hilfe von Ziehdüsen somit auf der natürlichen Einschnürung eines über seine Elastizitätsgrenze hinaus zugbelasteten Drahtes beruht und sich demgemäss die äusseren Abmasse eines Drahtes beim Drahtziehen nur verringern können, muss beim Ziehen eines Runddrahtes auf eine flache Querschnittsform von einem Drahtdurchmesser ausgegangen werden, der grösser als die grösste äussere Abmessung der flachen Querschnittsform ist (im Gegensatz zum Walzen eines Runddrahtes auf flache Querschnittsform, bei dem ja die grösste äussere Abmessung des gewalzten Drates in jedem Fall grösser als der Durchmesser des Runddrahtes ist), und diese Notwendigkeit eines gegenüber den äusseren Abmessungen der flachen Querschnittsform grösseren Durchmessers eines auf eine flache Querschnittsform zu ziehenden Runddrahtes führt jedenfalls dann, wenn es sich nicht nur um eine relativ geringfügige Abflachung handelt, dazu, dass ein relativ grosser Teil des Drahtquerschnittes des Runddrahtes « weggezogen » werden muss, um zu der flachen Querschnittsform des Drahtes zu gelangen, und daraus wiederum ergibt sich, dass das Ziehen eines Runddrahtes auf eine flache Querschnittsform jedenfalls bei grösseren Abflachungen in einem Ziehschritt praktisch unmöglich ist, weil bekanntlich ja die zulässige prozentuale Querschnittsverminderung pro Ziehschritt beschränkt ist, wenn die Gefahr eines Reissens des Drahtes bei dem Ziehvorgang weitgehend ausgeschlossen werden soll. Nun liessen sich diese mit der beschränkten prozentualen Querschnittsverminderung pro Ziehschritt verbundenen Schwierigkeiten zwar dadurch umgehen, dass man den Runddraht in mehreren aufeinanderfolgenden Ziehschritten mit jeweils relativ geringen prozentualen Abflachungen auf die gewünschte, eine grössere Abflachung darstellende flache Querschnittsform bringt, aber dabei würden sich dann andere, in erster Linie durch den Verwendungszweck des gezogenen Drahtes bedingte Schwierigkeiten ergeben, und zwar zunächst einmal das Problem, dass die Verwendung des Drahtes als Elektrodendraht die bei einem Ziehvorgang mit mehreren aufeinanderfolgenden Ziehschritten an sich unerlässliche Schmierung des Drahtes wegen des von einem fett- oder ölhaltigen Schmiermittelfilm gebildeten, für den Schweissvorgang nicht akzeptablen Uebergangswiderstandes von vornherein ausschliesst und bei einem Ziehvorgang mit mehreren aufeinanderfolgenden Ziehschritten ohne Schmierung die Gefahr eines Reissens des Drahtes nicht mehr ausgeschlossen werden kann, und ausserdem das Problem, dass bei den einzelnen Ziehschritten ja jeweils eine von der natürlichen Einschnürung abweichende Verformung des Drahtes erzwungen werden müsste, die in Verbindung mit der Verhärtung des Drahtes in jedem Ziehschritt die Gefahr eines Reissens des Drahtes ebenfalls beträchtlich erhöhen würde. Grundsätzlich wären nun zwar auch diese Probleme noch überwindbar, und zwar das Schmiermittelproblem dadurch, dass Schmierung angewandt wird und der Draht nach der Ueberführung in die besagte flache Querschnittsform durch eine die Schmiermittelreste beseitigende Reinigungsstation hindurchgeführt wird, und das Verhärtungsproblem dadurch, dass der Draht zwischen aufeinanderfolgenden Ziehschritten weichgeglüht wird, aber praktisch ist weder eine solche Reinigungsstation noch eine Weichglühstation innerhalb einer Schweissmaschine realisierbar, ganz abgesehen davon, dass der Hauptzweck des Ziehens bzw. der Kaltverformung ja nicht etwa die Erreichung einer flachen Querschnittsform des Drahtes sondern vielmehr die Drahtverfestigung ist und ein Weichglühen die erreichte Drahtverfestigung ja wieder zunichte machen würde.

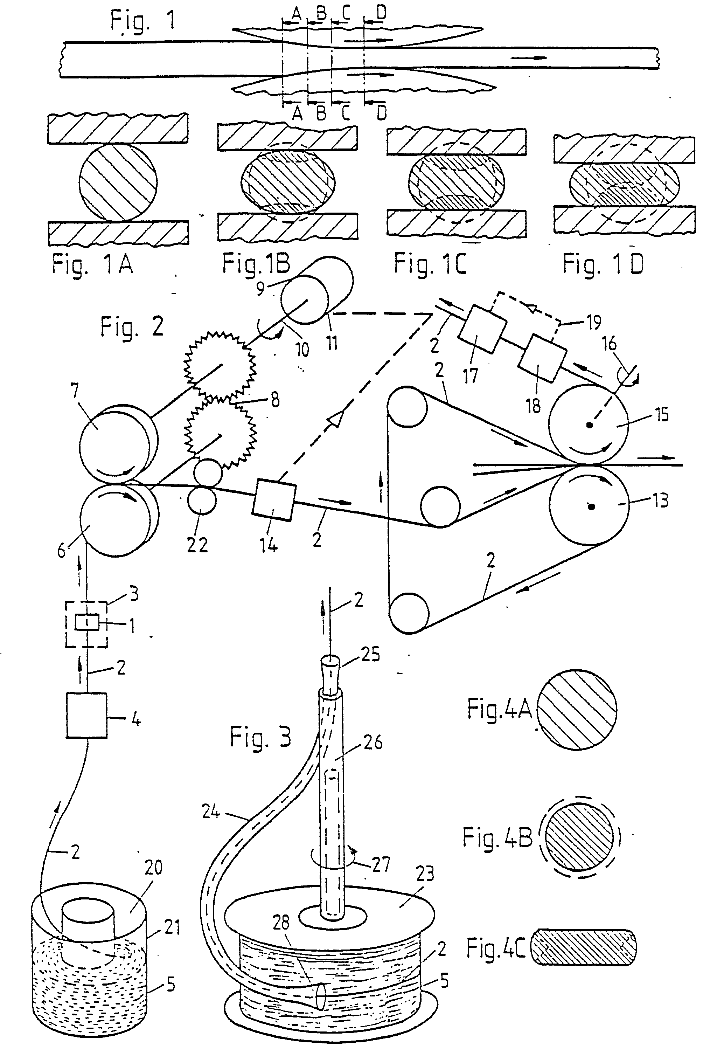

Aus den obengenannten Gründen ist es praktisch unmöglich, beim Ziehen eines Runddrahtes auf eine flache Querschnittsform die Gefahr von Drahtbrüchen auszuschliessen, wenn der Hauptzweck des Ziehens wie bei dem Verfahren nach der CH-PS 536 163 die Drahtverfestigung ist und es sich nicht nur um relativ geringfügige Abflachungen des Drahtes handelt, und da die Gefahr von Drahtbrüchen bei mit Drahtelektroden arbeitenden Schweissmaschinen schon wegen der damit verbundenen Produktionsausfälle und auch aus einer Reihe von anderen Gründen nicht in Kauf genommen werden kann, ist die in der CH-PS 536 163 angegebene Möglichkeit der Drahtverfestigung durch Ziehen auf relativ geringfügige Abflachungen des Drahtes (z. B. etwa auf eine elliptische Querschnittsform, wie sie in einem anderen Zusammenhang in Fig. 1B gezeigt ist) und entsprechend mässige Erhöhungen der auf die Gesamtquerschnittsfläche des Drahtes bezogenen Drahtfestigkeit an der Elastizitätsgrenze beschränkt. Solche durch Ziehen eines Runddrahtes auf eine im wesentlichen elliptische Querschnittsform hergestellten Elektrodendrähte mit einer relativ geringfügigen Abflachung des Drahtes (z. B. einem etwa bei 0,9 liegenden Verhältnis der kleinen Ellipsenachse zum Runddrahtdurchmesser) und einer entsprechend mässigen Festigkeitserhöhung sind im Rahmen des Verfahrens nach der CH-PS 536 163 zwar für das sogenannte Ueberlapptnahtschweissen ganz gut geeignet, weil beim Ueberlapptnahtschweissen die zu verschweissenden Blechränder nur aufeinandergeschweisst, jedoch nicht wie beim Quetschnahtschweissen auch noch zusammengequetscht werden müssen, sie eignen sich aber aus eben diesem Grunde nicht für das Quetschnahtschweissen, weil das dazu erforderliche Zusammenquetschen der zu verschweissenden Blechränder nur mit Hilfe von relativ grossen Festigkeitserhöhungen und entsprechend grossen Abflachungen des Drahtes (z. B. etwa auf eine Querschnittsform, wie sie in einem anderen Zusammenhang in Fig. 1D gezeigt ist) möglich ist und derart grosse Abflachungen eines Runddrahtes aus den schon genannten Gründen jedenfalls dann, wenn die Gefahr von Drahtbrüchen praktisch ausgeschlossen sein soll, durch Ziehen desselben nicht erreichbar sind.

Demgegenüber lassen sich durch Walzen eines Runddrahtes mit Fremdantrieb der Walzen durch einen Motor ohne Schwierigkeiten und insbesondere auch ohne jede Gefahr von Drahtbrüchen infolge dieser Kaltverformung relativ grosse Abflachungen des Drahtes und entsprechend grosse Festigkeitserhöhungen erzielen, und auch mittels eines Rollenwalzenpaares mit Eigenantrieb der Walzen durch den zwischen den Walzen hindurchgezogenen Draht sind ohne Inkaufnahme einer Drahtbruchgefahr noch um einiges grössere Abflachungen des Drahtes und entsprechend grössere Festigkeitserhöhungen als beim Ziehen eines Runddrahtes auf eine flache Querschnittsform erreichbar.

Von den aus der CH-PS 536 163 bekannten Möglichkeiten der Kaltverformung des Elektrodendrahtes ist also im Rahmen des in dieser CH-PS beschriebenen Verfahrens das Ziehen des Drahtes auf den Anwendungsbereich des Ueberlapptnahtschweissens beschränkt, während sich das Walzen des Drahtes in jedem Fall, also sowohl beim Ueberlapptnahtschweissen als insbesondere auch beim Quetschnahtschweissen, anwenden lässt. In der Praxis wurde daher bei dem in der CH-PS 536 163 beschriebenen Verfahren für die Kaltverformung und Verfestigung des Drahtes ausschliesslich entweder das Walzen oder das Ziehen des Drahtes benutzt.

Beim Walzen eines weichen Runddrahtes ergibt sich nun aber aufgrund des Walzvorganges eine ungleichmässige Verteilung der sogenannten Mikrohärte über der Querschnittsfläche des gewalzten Drahtes. Das liegt im Prinzip daran, dass der in die Walzanordnung einlaufende weiche Runddraht im Moment des Einlaufens, wie an dem in Fig. 1A gezeigten Schnitt durch die Walzanordnung in Fig. 1 in der Schnittebene A-A ersichtlich, die Walzflächen der beiden Walzen nur an je einem Punkt berührt und sich mit dem weiteren Einlaufen des Drahtes in die Walzanordnung und der damit beginnenden Zusammendrückung desselben, wie an dem in Fig. 1B gezeigten Schnitt durch die Walzanordnung in Fig. 1 in der Schnittebene B-B ersichtlich, zunächst einmal nur im Bereich der an den Walzflächen anliegenden Randzonen des Drahtes eine hohe Materialverfestigung ergibt, weil in diesen Randzonen der Druck wegen der geringen Auflagefläche des Drahtes auf den Walzflächen relativ gross ist, während der Druck nach der Mitte zwischen den beiden Walzflächen zu wegen der in dieser Richtung zunehmenden Breite der Querschnittsfläche des Drahtes immer mehr abnimmt und daher auch die Materialverfestigung nach der Mitte zwischen den beiden Walzflächen zu immer geringer wird. Wegen dieser von den genannten Randzonen nach der Mitte zwischen denselben zu abnehmenden Materialverfestigung hat auch der Drahtquerschnitt in der in Fig. 1B gezeigten Schnittebene B-B der Walzanordnung in Fig. 1 noch eine im wesentlichen elliptische Querschnittsform. Je weiter nun der Draht in die Walzanordnung einläuft und je mehr er damit zusammengedrückt wird, desto weiter rücken die Grenzen zwischen den Bereichen hoher Materialverfestigung und dem Bereich von im Mittel geringerer Materialverfestigung, wie z. B. an dem in Fig. 10 gezeigten Schnitt durch die Walzanordnung in Fig. 1 in der Schnittebene C-C ersichtlich, nach der Mitte zwischen den beiden Walzflächen zu vor, wobei dieses Vorrücken im Prinzip natürlich dadurch begrenzt ist, in welchem Masse die Walzanordnung den Runddraht zusammendrückt. Wenn also beispielsweise die Zusammendrückung des Drahtes durch die Walzanordnung nur relativ gering wäre und sich daher in der Schnittebene D-D in der Walzanordnung in Fig. 1 ein Schnitt wie z. B. in Fig. 1B ergeben würde, dann würde auch die Grenze zwischen den Bereichen der hohen Materialverfestigung und dem Bereich von im Mittel geringerer Materialverfestigung nur etwa so weit wie in dieser Fig. 1B durch unterschiedliche Schraffierungen angedeutet vorrücken, und der die Walzanordnung verlassende gewalzte Draht würde somit nur in den besagten Randzonen eine hohe Materialverfestigung und in seinem übrigen Querschnittsbereich eine nach der Mitte zwischen den beiden Randzonen zu abnehmende Materialverfestigung aufweisen und würde einen Drahtquerschnitt von im wesentlichen elliptischer Querschnittsform haben. Bei einer stärkeren Zusammendrückung des Drahtes durch die Walzanordnung wie beispielsweise der in Fig. 1D dargestellten Zusammendrückung hingegen können die Grenzen zwischen den Bereichen hoher Materialverfestigung und dem Bereich von im Mittel geringerer Materialverfestigung so weit vorrücken, dass die Bereiche hoher Materialverfestigung, wie an dem in Fig. 1D gezeigten Schnitt durch die Walzanordnung in Fig. 1 in der Schnittebene D-D ersichtlich, in der Mitte zwischen den beiden Walzflächen zusammenlaufen, und von da an ist eine weitere Festigkeitserhöhung des Drahtes durch noch stärkere Zusammendrückung nicht mehr zu erreichen. Man erkennt nun an den Figuren 1B bis 1D, dass bei verschiedenen Zusammendrückungen des Drahtes zwar unterschiedliche Anteile des Drahtquerschnitts eine hohe Materialverfestigung aufweisen, dass aber in jedem Fall ein nicht unbeträchtlicher Teil des Drahtquerschnitts von der hohen Materialverfestigung ausgenommen bleibt, so dass die auf den Gesamtquerschnitt bezogene durchschnittliche Festigkeitserhöhung des Drahtes in jedem Fall unter der Festigkeitserhöhung bleibt, die sich theoretisch erreichen liesse, wenn nicht ein Teil des Drahtquerschnitts von der hohen Materialverfestigung ausgenommen bleiben würde. Aehnliches würde im übrigen auch für das Ziehen eines weichen Runddrahtes auf eine flache Querschnittsform gelten, weil ja auch dabei — ähnlich wie beim Walzen — eine Zusammendrückung des Drahtes hauptsächlich in einer Richtung erfolgen müsste, um zu der flachen Querschnittsform zu gelangen, und daher auch dort mit Bereichen des Drahtquerschnitts zu rechnen wäre, die von einer hohen Materialverfestigung ausgenommen bleiben würden, aber praktisch ist das deswegen nicht von wesentlicher Bedeutung, weil sich aus den oben schon erläuterten Gründen bei Ziehen eines Runddrahtes auf eine flache Querschnittsform, abgesehen von sehr geringfügigen Abflachungen, die Gefahr von Drahtbrüchen nicht ausschliessen lässt und eine solche Gefahr bei mit Drahtelektroden arbeitenden Schweissmaschinen, wie schon erwähnt, nicht in Kauf genommen werden kann.

Der Erfindung lag nun die Aufgabe zugrunde, ein Verfahren der eingangs genannten Art und eine Schweissmaschine zur Durchführung dieses Verfahrens zu schaffen, mit dessen Hilfe man näher an die obengenannte, nur theoretisch erreichbare Festigkeitserhöhung herankommen kann und das somit grössere Erhöhungen der Drahtfestigkeit ermöglicht.

Erfindungsgemäss wird das bei einem Verfahren der eingangs genannten Art dadurch erreicht, dass die Kaltverformung in mehreren Schritten durchgeführt wird und der Elektrodendraht hierzu vor seinem Einlauf in die erste Elektrodenträgerrolle in einer ersten Verformungsstufe durch Ziehen und danach in einer zweiten Verformungsstufe durch Walzen kaltverformt wird und dass der Elektrodendraht in der ersten Verformungsstufe über seinen gesamten Drahtquerschnitt im wesentlichen gleichmässig verformt wird und hierzu seine genannte, im wesentlichen kreisrunde Querschnittsform während der Kaltverformung in der ersten Verformungsstufe aufrechterhalten wird und in dieser ersten Verformungsstufe nur der Drahtdurchmesser verringert wird und dass diese Durchmesserverringerung derart bemessen wird, dass der überwiegende Teil der Festigkeitsdifferenz zwischen der Drahtfestigkeit an der Elastizitätsgrenze nach der zweiten Verformungsstufe und der Drahtfestigkeit von weichgeglühtem Draht an der Elastizitätsgrenze auf den Festigkeitsunterschied zwischen der Drahtfestigkeit an der Elastizitätsgrenze nach der ersten Verformungsstufe und der Drahtfestigkeit von weichgeglühtem Draht an der Elastizitätsgrenze und somit auf die erste Verformungsstufe mit der genannten, über den gesamten Drahtquerschnitt im wesentlichen gleichmässigen Verformung des Elektrodendrahtes entfällt, und dass die Querschnittsform des Elektrodendrahtes erst in der zweiten Verformungsstufe in die genannte flache Querschnittsform überführt wird und der Elektrodendraht dabei mindestens so weit abgeflacht wird, dass die sich mit dieser Abflachung in der zweiten Verformungsstufe ergebende Verbreiterung des Elektrodendrahtes prozentual grösser als die sich mit dem Walzen in der zweiten Verformungsstufe ergebende prozentuale Verlängerung des Elektrodendrahtes wird.

Der Erfindung liegt die Erkenntnis zugrunde, dass der oben anhand eines Walzvorganges erläuterte Effekt, dass bei der Kaltverformung eines weichen Runddrahtes zu einem sogenannten Flachdraht ein nicht unbeträchtlicher Teil des Drahtquerschnitts des Flachdrahtes von der hohen Materialverfestigung ausgenommen bleibt, dadurch weitgehend ausgeschaltet werden kann, dass man den weichen Runddraht zunächst einmal in einem Ziehvorgang auf einen geringeren Durchmesser zieht und erst dann flachwalzt, weil der Runddraht bei diesem Ziehvorgang über seinen gesamten Drahtquerschnitt gleichmässig verformt und verfestigt wird, so dass der aus dem anschliessenden Flachwalzen hervorgehende Flachdraht auch an den Stellen seines Drahtquerschnitts, die beim direkten Flachwalzen von der hohen Materialverfestigung ausgenommen bleiben würden, eine höhere Festigkeit als die nach dem Ziehvorgang erreichte Drahtfestigkeit aufweist und sich daher eine durchschnittliche Festigkeit über dem Gesamtquerschnitt des Flachdrahtes ergibt, die um einiges grösser als beim direkten Flachwalzen des weichen Runddrahtes ist.

Die Hauptvorteile des vorliegenden Verfahrens liegen in der damit erreichbaren höheren Drahtfestigkeit an der Elastizitätsgrenze sowie allen daraus resultierenden schweisstechnischen Vorteilen und in zusätzlich erzielbaren beträchtlichen Einsparungen an Drahtmaterial. Die Einsparungen an Drahtmaterial ergeben sich im Prinzip aus dem genannten Ziehen des Runddrahtes auf einen geringeren Durchmesser in Verbindung mit der durch die Drahtverfestigung bei diesem Ziehvorgang ermöglichten stärkeren Flachwalzung des gezogenen Drahtes, weil der Draht sich beim Ziehen entsprechend seiner Querschnittsverminderung verlängert und die erforderliche Breite des Flachdrahtes dann mit dem einen verringerten Durchmesser aufweisenden gezogenen Draht durch die stärkere Flachwalzung desselben erzielt werden kann. Als zusätzlicher Vorteil ergibt sich dabei noch eine geringere Höhe des Flachdrahtes, weil sich dadurch der von dem Draht gebildete Widerstand zwischen Elektrodenträgerrolle und Schweissstelle und damit natürlich die durch den Schweissstrom verursachte Erwärmung des Drahtes beim Schweissen verringert. Mit der grösseren Erhöhung der Drahtfestigkeit an der Elastizitätsgrenze, die mit dem vorliegenden Verfahren im Vergleich zu dem Verfahren nach der CH-PS 536 163 erzielbar ist, ergeben sich zudem noch folgende schweisstechnischen Vorteile: Zunächst einmal lässt die höhere Drahtfestigkeit natürlich auch einen höheren Pressdruck der Elektrodenträgerrollen und damit eine bessere Zusammenquetschung der zu verschweissenden Blechränder beim Quetschnahtschweissen zu. Des weiteren lässt sich durch diese Erhöhung der Drahtfestigkeit an der Elastizitätsgrenze auch ein Sicherheitsabstand zwischen Arbeitspunkt und Elastizitätsgrenze im Spannungs-Dehnungs-Diagramm des Elektrodendrahtes schaffen (die Parameter für das betreffende Spannungs-Dehnungs-Diagramm sind der auf den Elektrodendraht in Form des Pressdruckes der Elektrodenträgerrolle wirkende Querdruck und die Temperatur des Elektrodendrahtes an der Schweissstelle, und der Arbeitspunkt im Spannungs-Dehnungs-Diagramm ist durch die Drahtspannung des Elektrodendrahtes an der Schweissstelle gegeben). Ein solcher Sicherheitsabstand zwischen Arbeitspunkt und Elastizitätsgrenze ist in Anbetracht dessen, dass bisher häufig bei einem nur wenig unter der Elastizitätsgrenze liegenden Arbeitspunkt gearbeitet wurde, insofern von wesentlichem Vorteil, als bei einem Betrieb mit genügendem Sicherheitsabstand zwischen Arbeitspunkt und Elastizitätsgrenze auch bei eventuellen Abweichungen von den Betriebsvorschriften und daraus resultierenden Verlagerungen des Arbeitspunktes nach oben und/oder Verlagerungen der Elastizitätsgrenze infolge von Aenderungen der Parameterwerte des Spannungs-Dehnungs-Diagramms nach unten noch gewährleistet ist, dass der Arbeitspunkt immer unter der Elastizitätsgrenze bleibt und damit praktisch nur elastische Verformungen des Elektrodendrahtes an der Schweissstelle auftreten können, während bei einem Betrieb mit nur wenig unter der Elastizitätsgrenze liegendem Arbeitspunkt Abweichungen von den Betriebsvorschriften unter Umständen zu einer Verlagerung des Arbeitspunktes über die Elastizitätsgrenze oder der Elastizitätsgrenze unter den Arbeitspunkt und damit zu unerwünschten Drahtdehnungen an der Schweissstelle führen können, die ihrerseits zur Folge haben, dass mindestens eine der beiden Elektrodenträgerrollen bzw. der auf dieser aufliegende Elektrodendraht nicht exakt sondern mit einem der Drahtdehnung proportionalen Schlupf auf dem zu schweissenden Werkstück abrollt, und ein solcher Schlupf führt ja bekanntlich zu Beeinträchtigungen der Schweissqualität, die umso grösser sind, je grösser der Schlupf bzw. die besagte Drahtdehnung ist, weil der Schlupf jeweils dann entsteht, wenn sich die Werkstückoberfläche in der Endphase der Schweissung der einzelnen Schweisspunkte der Schweissnaht etwas erweicht und die auf der Werkstücksoberfläche aufliegende Drahtoberfläche sich daher trotz des Pressdruckes der Elektragerrolle dadurch etwas in Schweissnahtrichtung verschieben kann, dass sie die erweichte Werkstückoberfläche mitnimmt und damit sozusagen die Werkstückoberfläche auf dem Werkstück verschiebt, denn das Ausmass dieser Verschiebungen muss ja proportional dem Schlupf sein, und je grösser diese Verschiebungen sind, desto grösser ist natürlich die Beeinträchtigung der Schweissqualität. Durch den mit dem vorliegenden Verfahren ermöglichten Sicherheitsabstand zwischen Arbeitspunkt und Elastizitätsgrenze lassen sich jedoch auch bei den in der Praxis immer wieder vorkommenden Abweichungen von den Betriebsvorschriften beim Schweissbetrieb solche Beeinträchtigungen der Schweissqualität ausschliessen, weil sich bei einem mit Sicherheit unter der Elastizitätsgrenze liegenden Arbeitspunkt keine Drahtdehnung an der Schweissstelle und damit auch kein Schlupf ergibt, so dass sich also mit dem besagten Sicherheitsabstand auch bei Abweichungen von den Betriebsvorschriften in der Regel noch eine nahe zu optimale Schweissqualität erzielen lässt.

Mit Vorteil kann bei dem vorliegenden Verfahren die Durchmesserverringerung in der ersten Verformungsstufe derart bemessen werden, dass mindestens 60 %, vorzugsweise mehr als 75 %, der Festigkeitsdifferenz zwischen der Drahtfestigkeit an der Elastizitätsgrenze nach der zweiten Verformungsstufe und der Drahtfestigkeit von weichgeglühtem Draht an der Elastizitätsgrenze auf den Festigkeitsunterschied zwischen der Drahtfestigkeit an der Elastizitätsgrenze nach der ersten Verformungsstufe und der Drahtfestigkeit von weichgeglühtem Draht entfällt.

Vorteilhaft kann die Durchmesserverringerung in der ersten Verformungsstufe auch derart bemessen werden, dass der überwiegende Teil der sich insgesamt in den beiden Verformungsstufen ergebenden Erhöhung der Drahtfestigkeit an der Elastizitätsgrenze auf die erste Verformungsstufe entfällt.

Es ist ferner von Vorteil, neben dem Kriterium der Festigkeitserhöhungen in den beiden Verformungsstufen auch das Kriterium der Verringerung der Querschnittsfläche des Drahtquerschnitts in den beiden Verformungsstufen für die Bemessung der Durchmesserverringerung in der ersten Verformungsstufe heranzuziehen. In diesem Sinne sollte die Durchmesserverringerung in der ersten Verformungsstufe zweckmässig auch derart bemessen werden, dass der überwiegende Teil, vorzugsweise mehr als 75 %, der sich insgesamt in den beiden Verformungsstufen ergebenden Verringerung der Querschnittsfläche des Drahtquerschnitts auf die erste Verformungsstufe entfällt.

Der Elektrodendraht sollte bei dem vorliegenden Verfahren in der zweiten Verformungsstufe zweckmässig so weit abgeflacht werden, dass der sich mit dieser Abflachung in der zweiten Verformungsstufe ergebende Prozentsatz der Verbreiterung des Elektrodendrahtes mindestens dreimal so gross, vorzugsweise mehr als fünfmal so gross, wie der sich mit dem Walzen in der zweiten Verformungsstufe ergebende Prozentsatz der Verlängerung des Elektrodendrahtes wird.

Vorteilhaft wird der Elektrodendraht bei dem vorliegenden Verfahren in der zweiten Verformungsstufe mindestens so weit abgeflacht, dass seine Breite grösser, vorzugsweise um mehr als 25 % grösser, als der Durchmesser des von dem Drahtvorrat abgezogenen Drahtes wird.

Die Befolgung der vorstehenden fakultativen Bemessungsregeln für die Bemessung der Durchmesserverringerung in der ersten Verformungsstufe und der Abflachung des Elektrodendrahtes in der zweiten Verformungsstufe hat allgemein den Vorteil, dass sich der mit dem vorliegenden Verfahren erzielbare Effekt einer homogeneren Festigkeitsverteilung über der Querschnittsfläche des abgeflachten Elektrodendrahtes und der daraus resultierenden höheren Drahtfestigkeit des nach dem vorliegenden Verfahren hergestellten abgeflachten Elektrodendrahtes gegenüber einem durch direktes Flachwalzen eines weichen Runddrahtes hergestelltem abgeflachten Elektrodendraht durch Befolgung jeder einzelnen dieser fakultativen Regeln weiter verbessert.

Bei einer bevorzugten Ausführungsform des vorliegenden Verfahrens wird mindestens ein Teil von das Walzen in der zweiten Verformungsstufe bewirkenden Walzmitteln mittels eines mindestens einen Teil der für das Walzen erforderlichen Verformungsarbeit leistenden Motors angetrieben. Das hat den wesentlichen Vorteil, dass die Drahtspannung des die Walzmittel verlassenden abgeflachten Elektrodendrahtes frei wählbar ist und somit optimal an die Erfordernisse des Schweissprozesses angepasst werden kann, was bei Fehlen eines die Walzmitteln antreibenden Motors nicht der Fall wäre, weil den Walzmitteln in diesem Fall die für das Walzen erforderliche Verformungsarbeit über den abgeflachten Elektrodendraht zugeführt werden müsste und dadurch die Drahtspannung desselben von der zu leistenden Verformungsarbeit abhängig wäre, was entweder bei vorgegebener Verformungsarbeit eine nur selten möglichen Anpassung des Schweissprozesses an die für die Uebertragung dieser Verformungsarbeit erforderliche Drahtspannung bedingen oder aber bei durch den Schweissprozess vorgegebener Drahtspannung zu einer Beschränkung der über den Draht übertragbaren Verformungsarbeit führen und damit in der Regel einen optimalen Walzgrad in der zweiten Verformungsstufe ausschliessen würde.

Mit besonderem Vorteil kann bei der vorgenannten bevorzugten Ausführungsform des vorliegenden Verfahrens die für das Ziehen in der ersten Verformungsstufe erforderliche Zugkraft mindestens teilweise dadurch erzeugt werden, dass von das Walzen in der zweiten Verformungsstufe bewirkenden Walzmitteln auf den Draht zusätzlich zu einem das Walzen bewirkenden Walzdruck eine Zugkraft in Richtung der Fortbewegung des Draht ausgeübt wird, die grösser als die Differenz zwischen dem Produkt aus dem aus der ersten Verformungsstufe hervorgehenden Drahtquerschnitt und der Spannung an der Elastizitätsgrenze des vom Drahtvorrat abgezogenen Drahtes und dem Produkt aus Drahtquerschnitt und Drahtspannung unmittelbar nach der zweiten Verformungsstufe und kleiner als die Differenz zwischen dem Produkt aus Drahtquerschnitt und Zugfestigkeit des Drahtes unmittelbar nach der ersten Verformungsstufe und dem Produkt aus Drahtquerschnitt und Drahtspannung unmittelbar nach der zweiten Verformungsstufe ist. Diese Art der Erzeugung der für das Ziehen in der ersten Verformungsstufe erforderlichen Zugkraft hat den Vorteil, dass auf besondere, ausschliesslich zur Erzeugung dieser Zugkraft dienende Mittel verzichtet werden kann. Vorteilhaft kann dabei eine Walze der die Zugkraft auf den Draht ausübenden Walzmittel zwecks ausreichender Kraftübertragung auf den Draht über einen Teil ihres Umfanges von dem Draht umschlungen sein. Der Umschlingungswinkel, über den der Draht die genannte Walze umschlingt, kann dabei zweckmässig derart bemessen werden, dass das Produkt aus dem im Bogenmass gemessenen Umschlingungswinkel und dem Gleitreibungskoeffizienten zwischen der genannten Walze und dem diese umschlingenden Draht mindestens gleich dem um den Wert Eins verminderten Verhältnis der Produkte aus Drahtspannung und Drahtquerschnitt vor Beginn der Umschlingung und nach der am Ende der Umschlingung befindlichen Walzstelle ist.

Vorteilhaft kann bei dem vorliegenden Verfahren der Elektrodendraht auf seinem Wege vom Drahtvorrat zur ersten Elektrodenträgerrolle vor seinem Einlauf ein das erste der von ihm durchlaufenen Kaltverformungsmittel zur Erzielung einer ausreichenden Drahtspannung eine den Draht zurückhaltende Vorrichtung, vorzugsweise eine Drahtbremse, durchlaufen. Die damit erreichbaren Vorteile sind erstens eine exakte Einführung des von dem Drahtvorrat abgezogenen Drahtes in die Kaltverformungmittel und zweitens insbesondere bei der Einführung in eine Ziehdüse die Möglichkeit, die sich aus der Reibung ergebende Abnutzung der Ziehdüse durch Einführung eines unter ausreichender Drahtspannung stehenden Drahtes in die Ziehdüse wesentlich herabzusetzen.

Vorzugsweise umfasst das vorliegende Verfahren nur zwei Kaltverformungsschritte in Form eines einzigen Ziehschrittes in der ersten Verformungsstufe sowie eines einzigen Walzschrittes in der zweiten Verformungsstufe. Der Vorteil einer solchen Beschränkung auf nur zwei Kaltverformungsschritte liegt in einem entsprechend geringen technischen Aufwand, zumal bei einem einzigen Ziehschritt in der ersten Verformungsstufe in aller Regel auch die oben schon erwähnte Möglichkeit besteht, auf besondere, ausschliesslich zur Erzeugung der für das Ziehen in der ersten Verformungsstufe erforderlichen Zugkraft dienende Mittel zu verzichten und stattdessen die das Walzen in der zweiten Verformungsstufe bewirkenden Walzmittel auch zur Erzeugung dieser Zugkraft zu benutzen.

In bestimmten Anwendungsfällen kann es aber auch von Vorteil sein, wenn das vorliegende Verfahren mehr als zwei Kaltverformungsschritte umfasst, so dass die Kaltverformung in mindestens einer der beiden Verformungsstufen in mehreren Schritten vorgenommen wird. In diesem Fall umfasst vorzugsweise die erste Verformungsstufe mehrere Ziehschritte, während die zweite Verformungsstufe vorteilhaft nur einen einzigen Walzschritt umfasst. Die Möglichkeit, in der ersten Verformungsstufe mehrere Ziehschritte vorzusehen, kommt insbesondere dann in Betracht, wenn man bei dem vorliegenden Verfahren von einem weichgeglühten Draht mit einer in Bezug auf die Drahtstärke nach der ersten Verformungsstufe relativ grossen Drahtstärke ausgeht, deren Reduktion auf die nach der ersten Verformungsstufe vorgesehene Drahtstärke in einem einzigen Ziehschritt nicht mehr möglich ist. Dabei ist es im Rahmen des vorliegenden Verfahrens auch möglich, den oder die ersten Ziehschritte in das Herstellerwerk des Elektrodendrahtes zu verlegen, weil das Resultat des vorliegenden Verfahrens im Prinzip natürlich nicht davon abhängt, an welchem Ort die einzelnen Schritte der Kaltverformung des Elektrodendrahtes vorgenommen werden, so dass es beispielsweise im Rahmen des vorliegenden Verfahrens auch möglich wäre, bei der erwähnten, nur zwei Kaltverformungsschritte umfassende Ausführungsform des vorliegenden Verfahrens den Ziehschritt in das Herstellerwerk des Elektrodendrahtes zu verlegen. In der Regel sollte bei dem vorliegenden Verfahren aber zweckmässig mindestens ein Teil der Kaltverformungsschritte, denen der Elektrodendraht unterworfen wird, auf dem Wege des Elektrodendrahtes von dem Drahtvorrat zu der ersten Elektrodenträgerrolle vorgenommen werden, und zwar deswegen, weil der von dem Drahtvorrat abgezogene Draht zweckmässig Runddraht sein sollte und in diesem Fall mindestens die Abflachung des Elektrodendrahtes auf dem Wege des Elektrodendrahtes von dem Drahtvorrat zu der ersten Elektrodenträgerrolle vorzunehmen ist. Der Grund dafür, dass der von dem Drahtvorrat abgezogene Draht zweckmässig Runddraht sein sollte, liegt darin, dass mit Drahtelektroden betriebene Schweissmaschinen einen grossen Drahtverbrauch haben und daher auch ein relativ grosser Drahtvorrat erforderlich ist und bei einem solchen grossen Drahtvorrat, der ja ein beträchtliches Gewicht hat, das Abziehen des Drahtes von dem Drahtverrat so gestaltet werden sollte, dass der Drahtvorrat selbst in Ruhe bleibt (also nicht wie z. B. bei einer sich infolge des Abziehens drehenden Spule mit dem Abziehen eine Rotationsbewegung ausführt, die bei der grossen Masse des Drahtes und der sich daraus ergebenden grossen Rotationsenergie nur unter erheblichem technischem Aufwand so steuerbar wäre, dass sie beim Anfahren und Abschalten der Schweissmaschine im Einklang mit dem Drahtverbrauch beschleunigt und abgebremst werden könnte), denn bei einem in Ruhe bleibenden Drahtvorrat ergibt sich beim Abziehen jeder einzelnen Windung des Drahtvorrats eines Torsion des Drahtes um 360°, und das ist nur dann für die Verwendung des Drahtes unerheblich, wenn es sich um einen Runddraht handelt, während ein tordierter abgeflachter Draht nicht verwendbar wäre.

Vorzugsweise sollte bei dem vorliegenden Verfahren von weichgeglühtem Draht ausgegangen werden. Denn der Ausgangspunkt des weichgeglühten Drahtes hat den Vorteil, dass der handelsübliche Normaldraht weichgeglühter Draht ist und demgemäss die Kosten für weichgeglühten Draht in der Regel am niedrigsten liegen. Und da ein moderner, mit Drahtelektroden arbeitender Hochleistungs-Schweissautomat bei durchgehendem Betrieb pro Tag bis zu einer Tonne Kupferdraht verbrauchen kann, spielen die Drahtkosten natürlich eine ganz entscheidende Rolle. In diesem Sinne kann also der von dem Drahtvorrat abgezogene Draht vorteilhaft weichgeglühter Runddraht sein. In rein technischer Hinsicht kann es andererseits aber auch von Vorteil sein, wenn der von dem Drahtvorrat abgezogene Draht härter als weichgeglühter Draht ist, weil der Draht in diesem Fall auch nach den Kaltverformungsschritten, die er auf seinem Wege von dem Drahtvorrat zu der ersten Elektrodenträgerrolle zu durchlaufen hat, in der Regel eine grössere Drahtfestigkeit an der Elastizitätsgrenze aufweist, als in den gleichen Kaltverformungsschritten mit von dem Drahtvorrat abgezogenem weichgeglühten Draht zu erreichen gewesen wäre, und die Entscheidung, ob nun der Vorteil der Kostenersparnis oder der Vorteil einer grösseren Drahtfestigkeit wahrgenommen wird, hängt im wesentlichen davon ab, ob die grössere Drahtfestigkeit benötigt wird oder nicht. Auf jeden Fall sollte aber der von dem Drahtvorrat abgezogene Draht zweckmässig auch nicht zu hart sein, weil sich dann nämlich Probleme mit der Drahtführung vom Drahtvorrat zur Schweissmaschine und auch Probleme mit der oben erwähnten Torsion des Drahtes um je 360° pro von dem Drahtvorrat abgezogener Windung ergeben können.

Als Elektrodendraht wird bei dem vorliegenden Verfahren zweckmässig Kupferdraht verwendet, weil dieser sowohl für die vorgesehenen Kaltverformungsschritte als auch für das Schweissverfahren selbst am besten geeignet ist. In Betracht kommt dabei in erster Linie Kupfer mit einem Reinheitsgrad von mindestens 99,4 %, vorzugsweise mehr als 99,8 %.

Die Erfindung bezieht sich ferner auf eine Widerstandsrollennaht-Schweissmaschine nach Anspruch 20. Die Walzmittel können dabei zweckmässig ein Rollenwalzenpaar sowie Antriebsmittel für beide Walzen desselben und die Antriebsmittel einen Motor und Steuerungsmittel zur Steuerung der Drehzahl desselben sowie Kraftübertragungsmittel zwischen dem Motor und den beiden Walzen mit einem im Kraftfluss zwischen einer der beiden Walzen und dem Motor liegenden Umkehrgetriebe umfassen. Zur Erzielung einer vorbestimmten Drahtspannung des Elektrodendrahtes nach Verlassen der Walzmittel kann die Schweissmaschine ferner vorteilhaft eine Drahtspannaggregat mit Mitteln zur Erzeugung der Drahtspannung, Mitteln zur Messung der Regelabweichung zwischen Ist- und Sollwert der Drahtspannung und Mitteln zur Uebertragung der Regelabweichung als Steuergrösse auf die Steuermittel zur Steuerung der Drehzahl des Motors zum Zwecke einer derartigen Einregelung der Motordrehzahl und damit der Drehzahl der Walzen, dass die Regelabweichung vernachlässigbar klein und damit die Drahtspannung nahezu konstant wird, umfassen.

Die Schweissmaschine zur Durchführung des vorliegenden Verfahrens ist ferner zweckmässig mit einer Zieheinrichtung mit mindestens einer Ziehdüse zur Kaltverformung in der ersten Verformungsstufe versehen. Ferner können vorteilhaft Drahtführungsmittel zu einer derartigen Drahtführung im Bereich der Walzmittel vorgesehen sein, dass eine der von dem Motor angetriebenen Walzen über einen Teil ihres Umfanges von dem Elektrodendraht umschlungen ist und dadurch mindestens ein Teil der für das Ziehen in der ersten Verformungsstufe erforderlichen Zugkraft auf den Draht übertragen wird. Vorteilhaft ist weiter auch eine Drahtbremse im Bereich zwischen Drahtvorrat und Kaltverformungsmitteln zur exakten Einführung des Elektrodendrahtes in die Kaltverformungsmittel sowie eventuell zur Herabsetzung der Abnutzung der Ziehdüse. Ausserdem kann an der Schweissmaschine vorteilhaft auch eine Anspitzeinrichtung zum Anspitzen des vor Inbetriebsetzung der Schweissmaschine in die Ziehdüse einzufädelnden Elektrodendrahtes, vorzugsweise in Form einer geteilten Ziehdüse, angebracht sein. Zur Speicherung des Drahtvorrates kann ferner vorteilhaft ein Drahtspeicher, vorzugsweise in Form eines topfförmigen Behälters mit einem zur Drahtspeicherung dienenden ringförmigen Hohlraum oder eine liegende Spule mit drehbarem Galgen als Abzugsmittel, vorgesehen sein.

Anhand der nachstehenden Figuren ist die Erfindung im folgenden an einigen Ausführungsbeispielen näher erläutert. Es zeigen

   Fig. 1 eine Darstellung des Walzvorganges eines Drahtes in Seitenansicht mittels eines nur in Teilseitenansicht dargestellten Rollenwalzenpaares

   Fig. 1A bis 1D Querschnitte durch die Fig. 1 in den Schnittebenen A-A, B-B, C-C und D-D

   Fig. 2 ein Schema des prinzipiellen Aufbaues eines Ausführungsbeispiels einer Vorrichtung zur Durchführung des vorliegenden Verfahrens mit einer Ziehdüse als Kaltverformungsmittel in der ersten Verformungsstufe und einem durch einen Motor angetriebenen Rollenwalzenpaar als Kaltverformungsmittel in der zweiten Verformungsstufe sowie einem topfförmigen Behälter mit ringförmigem Hohlraum als Speicher für den Drahtvorrat

Fig. 3 eine schematische Darstellung einer liegenden Spule als Speicher für den Drahtvorrat mit einem drehbaren Galgen als Mittel zum Abziehen des Drahtes von der Spule

Fig. 4A bis 4C eine schematische Darstellung des sich bei dem vorliegenden Verfahren ergebenden Zustandes des Elektrodendrahtes vor der ersten Verformungsstufe (Fig. 4A), zwischen der ersten und der zweiten Verformungsstufe (Fig. 4B) und nach der zweiten Verformungsstufe (Fig. 4C), wobei die Dichte der Schraffierungen den Verfestigungsgrad in dem betreffenden Querschnitt bzw. Querschnittsbereich symbolisiert.

In den Figuren 1 sowie 1A bis 1D ist das Walzen eines weichen Runddrahtes in den einzelnen Phasen des Walzvorganges schematisch dargestellt. Der zunächst noch weiche Runddraht läuft in der Ebene A-A in die von dem in Fig. 1 in Teilansicht gezeigten Rollenwalzenpaar gebildete Walzanordnung ein. An dieser Einlaufstelle ist der Draht noch kreisrund, wie der in Fig. 1A dargestellte Schnitt durch die Fig. 1 in der Ebene A-A zeigt. Mit der weiteren Fortbewegung innerhalb der Walzanordnung wird der Draht dann zusammengedrückt, wobei er zunächst einmal eine im wesentlichen elliptische Querschnittsform entsprechend dem in Fig. 1B dargestellten Schnitt durch die Fig. 1 in der Ebene B-B annimmt und dann sukzessive in mehr und mehr abgeplattete Querschnittsformen wie in den in Fig. 1C und Fig. 1D dargestellten Schnitten durch die Fig. 1 in den Ebenen C-C und D-D übergeht. Mit der Zusammendrückung und der damit verbundenen Kaltverformung wird der Draht bei dem Walzvorgang verfestigt, wobei sich über der Querschnittsfläche des Drahtes Bereiche unterschiedlicher Festigkeit ergeben, die in den Figuren 1B bis 1D durch unterschiedliche Schraffierungen markiert sind. Die Dichte der Schraffierung symbolisiert dabei den mittleren Verfestigungsgrad in dem betreffenden Bereich, wozu aber zu bemerken ist, dass es natürlich an den Bereichsgrenzen keine sprunghaften Aenderungen des Verfestigungsgrades sondern im wesentlichen nur stetige Uebergänge gibt und die Bereichsgrenzen nur etwa die Stellen angeben, von denen an beim Uebergang von einem Bereich hoher Verfestigung in einen Bereich geringerer Verfestigung der Verfestigungsgrad in stärkerem Masse abzufallen beginnt. Die unterschiedliche Verfestigung in den verschiedenen Bereichen dürfte mit dem unterschiedlichen mittleren Druck zusammenhängen, der in den betreffenden Bereichen auf die Kristallkörner, aus denen der Draht mikroskopisch gesehen aufgebaut ist, ausgeübt wird. Denn die Verfestigung beruht ja im Prinzip auf einer Umbildung gröberer in feinere Kristallkörner, und einer der auslösenden Faktoren für eine solche Umbildung ist der auf das Kristallkorn ausgeübte Druck. Der unterschiedliche Druck in den verschiedenen Bereichen ergibt sich daraus, dass die Breite der Auflagefläche, mit der der Draht in einer bestimmten Querschnittsebene wie z. B. in einer der in den Figuren 1B bis 1D gezeigten Querschnittsebenen auf der Walzfläche aufliegt, in jedem Fall kleiner als die Breite des Drahtquerschnittes in der betrachteten Querschnittsebene ist. Würde man nämlich im Bereich der betrachteten Querschnittsebene, also z. B. im Bereich der in Fig. 1B gezeigten Querschnittsebene, aus dem Draht eine dünne Scheibe von der Stärke $\Delta x$ herausschneiden, dann würden sich am Scheibenrand zwei Auflageflächen von der Breite $b$ und dementsprechend der Grösse $b \cdot \Delta x$ gegenüberliegen, mit denen der Draht auf den Walzflächen aufliegt und auf die die Walzflächen bei einem Auflagedruck $p$ je eine Kraft von der Grösse $p \cdot b \cdot \Delta x$ ausüben, und diese beiden einander entgegengerichteten gleichgrossen Kräfte würden an der in der Mitte zwischen den beiden Auflageflächen liegenden Stelle grösster Breite $b_m$ des Drahtquerschnitts einen Druck von der Grösse $p_m = \text{Kraft/Fläche} = p \cdot b \cdot \Delta x / b_m \cdot \Delta x = p \cdot b/b_m$ verursachen, der im Verhältnis der Breite $b$ der Auflageflächen zur Breite $b_m$ des Drahtquerschnitts an der betrachteten Stelle kleiner als der Auflagedruck $p$ ist. Dementsprechend muss der Druck innerhalb des Drahtes in jeder betrachteten Querschnittsebene zwischen den Schnittebenen A-A und D-D in Fig. 1 von den Auflageflächen des Drahtes auf den Walzflächen nach der Mitte des Drahtquerschnitts zu abnehmen, weil die Breite $b$ der Auflageflächen, wie schon erwähnt, in jedem Fall kleiner als die Breite $b_m$ des Drahtquerschnitts in der Mitte zwischen den beiden Auflageflächen ist, und wenn man nun von der als gegeben anzusehenden Voraussetzung ausgeht, dass für die genannte, eine Verfestigung mit sich bringende Umbildung gröberer in feinere Kristallkörner ein bestimmter mittlerer Mindestdruck erforderlich ist, dann ergeben sich daraus die Grenzen zwischen den besagten Bereichen unterschiedlicher Festigkeit bzw. Verfestigung, und zwar längs der Aequipotentiallinien bzw. -flächen, an denen dieser mittlere Mindestdruck herrscht. In den Bereichen mit geringem Abstand der Schraffierungslinien in den Figuren 1B bis 1D liegt dabei der Druck über dem genannten Mindestdruck, so dass sich dort eine hohe Materialverfestigung ergibt, während in den Bereichen mit grösserem Abstand der Schaffierungslinien in den Figuren 1B bis 1D der Druck unter dem genannten Mindestdruck liegt und sich daher dort eine geringere Materialverfestigung ergibt. Dass in diesen Bereichen mit grösserem Abstand der Schraffierungslinien trotz der Tatsache, dass der Druck dort unter dem genannten Mindestdruck liegt, überhaupt eine Materialverfestigung auftritt, liegt daran, dass der Druck an einer bestimmten Stelle nur dem Mittelwert der auf die Vielzahl der Kristallkörner an dieser Stelle wirkenden Drücke entspricht, dass aber natürlich die auf die einzelnen Kristallkörner wirkenden Drücke mit einer statistischen Verteilung nach oben und unten von diesem Mittelwert abweichen (ebenso wie sich ja auch der Gasdruck aus dem Mittelwert der Geschwindigkeiten der einzelnen Gasmoleküle ergibt und die Einzelgeschwindigkeiten der Moleküle von diesem Mittelwert nach oben und unten abweichen) und daher auch in Bereichen mit unter dem genannten Mindestdruck liegendem Druck auf einen Teil der Kristallkörner ein über dem Mindestdruck liegender Druck wirkt und nur dieser Teil umso kleiner ist, je weiter der Druck unter dem genannten Mindestdruck liegt.

Die in den Figuren 1B, 1C und 1D dargestellten Schnitte durch die Fig. 1 in den Schnittebenen B-B, C-C, und D-D zeigen nun, dass anfangs das Breitenverhältnis $b/b_m$ und entsprechend das Druckverhältnis $p_m/p$ mit z. B. ca. 0,3 in der Fig. 1B noch relativ klein ist und sich entsprechend auch die Bereiche hoher Materialverfestigung nur auf die in unmittelbarer Umgebung der Auflageflächen des Drahtes auf den Walzflächen liegenden Randzonen beschränken, dass aber dann mit der weiteren Fortbewegung des Drahtes innerhalb der Walzanordnung die Verhältnisse $b/b_m$ und $p_m/p$ sukzessive auf z. B. ca. 0,5 in der Fig. 1C und z. B. ca. 0,7 in der Fig. 1D ansteigen und sich entsprechend auch die Bereiche hoher Materialverfestigung nach der Drahtmitte zu ausweiten. Ein als Elektrodendraht vorgesehener weicher Runddraht kann nun nur etwa so weit gewalzt werden, bis die Bereiche hoher Materialverfestigung wie in Fig. 1D in der Drahtmitte aufeinandertreffen, da beim weiteren Walzen mit Gefügeschäden zu rechnen wäre, weil in den Bereichen, wo keine weitere Materialverfestigung mehr stattfinden kann, (ähnlich wie bei einem Zugversuch an der Einschnürungsstelle) bei weiterer Verformung dann der Bruch eintritt. Die Fig. 1D stellt daher etwa das Endstadium dar, bis zu dem ein weicher Runddraht gewalzt werden darf, und wie an dieser Fig. 1D ersichtlich bleibt in diesem Endstadium noch ein relativ grosser Teil des gesamten Drahtquerschnitts von der hohen Materialverfestigung ausgenommen, so dass auch die mit der Walsanordnung in Fig. 1 erzielte Festigkeit des gewalzten Drahtes um einiges hinter der Festigkeit zurückbleibt, die sich ergeben hätte, wenn die hohe Materialverfestigung sich auf den gesamten Drahtquerschnitt erstrecken würde. Hauptzweck des vorliegenden Verfahrens ist es nun, den Anteil des Drahtquerschnittes, auf den sich die hohe Materialverfestigung erstreckt, zu erhöhen und dadurch die schweisstechnischen Vorteile zu ermöglichen, die sich mit einer solchen Erhöhung der Drahtfestigkeit erzielen lassen.

Zu diesem Zweck dient die in Fig. 2 schematisch dargestellte Vorrichtung zur Durchführung des vorliegenden Verfahrens. Bezüglich der Fig. 2 sei zunächst einmal darauf hingewiesen, dass das dort dargestellte Aufbauschema nur die für die Durchführung und Erläuterung des vorliegenden Verfahrens einerseits und für eine übersichtliche zeichnerische Darstellung andererseits notwendigen Teile von zur Durchführung des vorliegenden Verfahrens geeigneten Schweissmaschinen zeigt und dass auch die gezeigten Teile zum grossen Teil in symbolisierter Form dargestellt sind. Nur symbolisch angedeutet sind beispielsweise die im dargestellten Ausführungsbeispiel eine Ziehdüse 1 umfassende, zum Ziehen des Elektrodendrahtes 2 und damit zur Kaltverformung in der ersten Verformungsstufe dienende Zieheinrichtung 3, die vor der Zieheinrichtung 3 angeordnete Drahtbremse 4, die zum Walzen des Elektrodendrahtes 2 und damit zur Kaltverformung in der zweiten Verformungsstufe dienende Walzeinrichtung 6 bis 11 mit dem Rollenwalzenpaar 6, 7 sowie dem Umkehrgetriebe 8 und der einen Motor 9 sowie Steuerungsmittel zur Steuerung der Drehzahl der Abtriebswelle 10 desselben umfassenden Antriebseinrichtung 11, das zur Erzielung einer vorbestimmten Drahtspannung des Elektrodendrahtes 2 beim Einlauf in die erste Elektrodenträgerrolle 13 dienende Drahtspannaggregat 14 (das in der Regel eine mit einer Kraft belastete Umlenkrolle für den Elektrodendraht und Mittel zur Messung der Drahtlänge zwischen dieser Umlenkrolle und dem Rollenwalzenpaar 6, 7 bzw. zur Messung des Abstandes zwischen der Ist-Position dieser Umlenkrolle und einer vorgegebenen, einer bestimmten Drahtlänge zwischen Umlenkrolle und Rollenwalzenpaar entsprechenden Soll-Position der Umlenkrolle sowie Mittel zur Uebertragung der von dem gemessenen Abstand zwischen Ist- und Soll-Position der Umlenkrolle gebildeten Regelabweichung auf die Steuerungsmittel der Antriebseinrichtung 11 zu einer derartigen Einregelung der Drehzahl der Welle 10 und damit des Rollenwalzenpaares 6, 7, dass die Drahtlänge zwischen demselben und der Umlenkrolle im wesentlichen konstant bleibt bzw. die vorgenannte Regelabweichung Null wird, umfasst), der Antrieb der zweiten Elektrodenträgerrolle 15 durch die sich drehende Antriebswelle 16, die zum Abziehen des Elektrodendrahtes 2 von der zweiten Elektrodenträgerrolle 15 und zur Weiterleitung in einen Drahtzerhacker vorgesehene und mit Mitteln zur stufenweisen oder stetigen Aenderung der Fördergeschwindigkeit versehene ausgangsseitige Drahtfördereinrichtung 17 (die z. B. von einer mit konstanter Drehzahl angetriebenen Stufenscheibe mit einer Vielzahl von im Durchmesser fein abgestuften ringförmigen Führungsflächen für den Elektrodendraht gebildet oder entsprechend der in diesem Fall mit einer Förderscheibe auf der Welle 10 zu versehenden Antriebseinrichtung 11 aufgebaut sein kann) und die ausgangsseitige Drahtspannvorrichtung 18 (die entweder im Falle einer Ausbildung der Drahtfördereinrichtung 17 entsprechend der Antriebseinrichtung 11 wie das Drahtspannaggregat 14 ausgebildet sein kann und dann über den Uebertragungsweg 19 die Fördergeschwindigkeit der Drahtfördereinrichtung 17 so einregelt, dass sich auch beim Abziehen des Elektrodendrahtes 2 von der zweiten Elektrodenträgerrolle 15 eine bestimmte konstante Drahtspannung ergibt, oder die im Falle der Ausbildung der Drahtfördereinrichtung 17 als angetriebene Stufenscheibe z. B. von einer federbelasteten Rolle gebildet sein kann, über die der Elektrodendraht 2 läuft und deren Feder den Draht spannt, wobei entweder eine der Federspannung entsprechende Grösse angezeigt wird und die Einstellung der Fördergeschwindigkeit der Drahtfördereinrichtung 17 dann aufgrund dieser Anzeige von Hand erfolgt oder aber die federbelastete Rolle derart mit der die Drahtfördereinrichtung bildenden Stufenscheibe zusammenwirkt, dass der Elektrodendraht bei nachlassender Federspannung der federbelasteten Rolle selbsttätig auf die der nächsthöheren Fördergeschwindigkeitsstufe zugeordnete ringförmige Führungsfläche und bei zunehmender Federspannung der federbelasteten Rolle selbsttätig auf die der nächsttieferen Fördergeschwindigkeitsstufe zugeordnete ringförmige Führungsfläche übergeht). Alle diese in der Zeichnung nur symbolisch angedeuteten Teile der in Fig. 2 schematisch dargestellten Schweissmaschine mit Ausnahme der Zieheinrichtung 3 sind von den vorbekannten Schweissmaschinen, mit denen das eingangs erwähnte bekannte Verfahren nach der CH-PS 536 163 durchgeführt wird, her bereits bekannt und bedürfen daher keiner weiteren näheren Erläuterung.

Bei der Durchführung des vorliegenden Verfahrens in der Schweissmaschine nach Fig. 2 wird von dem in dem ringförmigen Speicherraum 20 des als Drahtspeicher dienenden topfförmigen Behälters 21 gespeicherten Drahtvorrat 5 ein weicher Kupferdraht 2 mit im wesentlichen kreisförmigem Querschnitt von 1,496 mm² Querschnittsfläche und einem Durchmesser von 1,38 mm sowie einer Drahtfestigkeit $6_E$ an der Elastizitätsgrenze zwischen 8,5 kg/mm² und 12,5 kg/mm² abgezogen.

Der von dem Drahtvorrat 5 abgezogene Draht 2 durchläuft zunächst die Drahtbremse 4, die zur exakten Einführung des Drahtes 2 in die Zieheinrichtung 3 vorgesehen ist. Von der Drahtbremse 4 läuft der Draht 2 entlang der Achse der innerhalb der Zieheinrichtung 3 vorgesehenen Ziehdüse 1 unter Spannung zu dieser Ziehdüse 1. Die Spannung des von der Drahtbremse 4 zur Ziehdüse 1 laufenden Drahtes 2 dient hauptsächlich zur exakten Einführung des Drahtes 2 in die Ziehdüse 1 und kann daher relativ gering sein, sie kann aber auch durch stärkeres Anziehen der Drahtbremse so hoch gemacht werden, dass sich zusätslich der Vorteil einer merklichen Reduktion der Abnutzung der Ziehdüse 1 bzw. eine entsprechende Erhöhung der Lebensdauer derselben ergibt. Eine höhere Spannung des von der Drahtbremse 4 zur Ziehdüse 1 laufenden Drahtes kann aber vorteilhaft auch dazu dienen, eine Durchmesserreduktion in der Ziehdüse 1 zu ermöglichen, die um einiges geringer als die in dem in Betracht kommenden Drahtdurchmesserbereich üblichen, in der Grössenordnung von 10 % liegenden Durchmesserreduktionen in Ziehdüsen ist, wobei allerdings zu bemerken ist, dass diese Vorspannung zur Vermeidung der Gefahr eines Drahtbruches auch nicht zu hoch gewählt werden darf. In der Regel ist die von der Drahtbremse 4 verursachte Spannung des Drahtes 2 aber gering zu halten, um möglichst grosse Durchmesserreduktionen in der Ziehdüse 1 zu ermöglichen, denn mit dem vorliegenden Verfahren wird ja angestrebt, einen möglichst grossen Teil der Gesamtverformung durch Ziehen zu bewirken, weil beim Ziehen ja eine gleichmässige Verformung und Verfestigung erzielt wird.

Der von der Drahtbremse 4 kommende Draht 2 wird beim Durchlaufen der Ziehdüse 1 von seinem ursprünglichen Durchmesser von 1,38 mm auf einen Durchmesser von 1,2 mm reduziert. Das entspricht einer Querschnittsreduktion auf 75,6 % des ursprünglichen Drahtquerschnittes und damit — da das Volumen des Drahtmaterials konstant bleibt — einer Verlängerung des Drahtes um den Faktor 1,3225 bzw. um 32,25 %. Die Drahtfestigkeit an der Elastizitätsgrenze wird bei diesem Ziehvorgang von den genannten 8,5 bis 12,5 kg/mm² auf 28 bis 33 kg/mm² erhöht. Die Aenderung des Drahtquerschnittes des Drahtes 2 bei dem Ziehvorgang in der Ziehdüse 1 sowie die sich dabei ergebende Drahtverfestigung sind schematisch in den Figuren 4A und 4B dargestellt. Die Fig. 4A zeigt den Drahtquerschnitt des in die Ziehdüse 1 einlaufenden und die Fig. 4B den Drahtquerschnitt des dieselbe verlassenden Drahtes 2, und die Dichte der Schraffierungen in den Figuren 4A und 4B symbolisiert die Drahtfestigkeit vor und nach der Ziehdüse 1. Ein Vergleich mit den Figuren 1A und 1D, die den gleichen Draht vor und nach einem direkten Flachwalzen zeigen, macht deutlich, dass die durch die Dichte der Schraffierungen symbolisierte Drahtfestigkeit bereits nach dem Ziehvorgang höher als nach dem direkten Flachwalzen ist, weil der Drahtquerschnitt in der Fig. 1D noch Bereiche geringerer Materialverfestigung aufweist, während der Drahtquerschnitt in Fig. 4B eine über den gesamten Querschnitt gleichmässige hohe Materialverfestigung zeigt.

Die Ziehdüse 1 besteht im wesentlichen aus einem Diamant-Ziehstein mit einer rotationssymmetrischen Düsenöffnung für eine Durchmesserreduktion von 1,38 mm auf 1,2 mm und ist zur Abführung der bei der Verformung entstehenden Wärme mittels einer nicht dargestellten Kühleinrichtung wassergekühlt. Durch die Kühlung und die Verwendung eines Diamant-Ziehsteins kann die Abnutzung der Ziehdüse 1 relativ gering gehalten werden.

Die für das Ziehen des Drahtes 2 durch die Ziehdüse 1 notwendige Energie liefert der Motor 9 über das Umkehrgetriebe 8 und die Walze 6, die neben ihrer Walzfunktion noch die Funktion einer Förderrolle zur Erzeugung der für das Ziehen notwendigen Zugkraft hat. Damit auf den Draht 2 eine ausreichende Zugkraft übertragen wird, umschlingt der Draht 2 die Walze 6, wie in Fig. 2 ersichtlich, über einen Umschlingungswinkel von ca. 90°. Zu beachten ist bei der Bemessung dieses Umschlingungswinkels, dass die Umfangsgeschwindigkeit der Walzen 6 und 7 gleich der Drahtgeschwindigkeit des das Rollenwalzenpaar 6, 7 verlassenden Elektrodendrahtes 2 ist und diese Drahtgeschwindigkeit wegen der sich beim Walzen ergebenden weiteren Querschnittsverminderung des Drahtes 2 und der daraus resultierenden Drahtverlängerung grösser als die Drahtgeschwindigkeit des in das Rollenwalzenpaar 6, 7 einlaufenden Drahtes 2 ist, so dass sich also im Bereich der genannten Umschlingung zwischen der Walze 6 und dem von dieser geförderten Draht 2 ein der prozentualen Drahtverlängerung im Rollenwalzenpaar 6, 7 entsprechender Schlupf ergibt und dementsprechend die Kraftübertragung von der Walze 6 auf den geförderten Draht 2 nicht durch Haft- sondern durch Gleitreibung erfolgt.

Der von der Walze 6 geförderte Draht 2 durchläuft dann das Rollenwalzenpaar 6, 7 und wird von diesem flachgewalzt, wobei sich ein Flachdraht mit der in Fig. 4C gezeigten Querschnittsform mit einer Breite von 1,84 mm und einer Höhe von 0,585 mm und einer Querschnittsfläche von 1,054 mm² ergibt. Da der Draht 2 nach Verlassen der Ziehdüse 1 einen Durchmesser von 1,2 mm und damit eine Querschnittsfläche von 1,131 mm² hatte, ergibt sich also in dem Rollenwalzenpaar 6, 7 eine weitere Querschnittsreduktion auf 93,2 % des Drahtquerschnitts nach dem Ziehen und damit eine Gesamtquerschnittsreduktion auf 70,5 % des ursprünglichen Drahtquerschnittes, was aufgrund der gleichbleibenden Drahtvolumens einer Verlängerung des Drahtes um den Faktor 1,4191 bzw. um 41,91 % entspricht. Die Drahtfestigkeit an der Elastizitätsgrenze erhöht sich bei diesem Walzvorgang nochmals von den genannten 28 bis 33 kg/mm² auf 33,5 bis 38,5 kg/mm². Bei diesem Flachwalzen des Drahtes 2 in dem Rollenwalzenpaar 6, 7 tritt natürlich der oben anhand der Figuren 1 sowie 1A bis 1D erläuterte Effekt, da dieser ja prinzipieller Natur ist, ebenfalls auf, was in der Fig. 4C durch die beiden seitlichen Randbereiche mit einer Schraffierung von etwa gleicher Dichte wie der in Fig. 4B angedeutet ist, jedoch hat dieser Effekt hier nur noch einen sehr geringen Einfluss, weil der Draht ja schon vor dem Walzvorgang an allen Stellen seiner Querschnittsfläche eine hohe Materialverfestigung aufwies und die genannten seitlichen Randbereiche daher keine wesentliche Verringerung der mittleren Drahtfestigkeit über dem in Fig. 4C gezeigten Querschnitt gegenüber der Drahtfestigkeit im zentralen Bereich des in Fig. 4C gezeigten Querschnitts mehr verursachen können.

Aus der obengenannten Drahtverlängerung um rund 42 % ergibt sich im Vergleich zu dem aus der CH-PS 536 163 bekannten Verfahren, bei dem sich nur eine Drahtverlängerung um rund 18 % ergibt, eine Materialeinsparung gegenüber dem Verfahren nach der CH-PS 536 163 im Verhältnis von 1,18 : 1,42 = 0,83 und somit also um rund 17 %, was bei dem oben schon erwähnten beträchtlichen Kupferverbrauch von modernen Hochleistungs-Schweissmaschinen ganz beträchtliche Kostenersparnisse mit sich bringt.

Der das Rollenwalzenpaar 6, 7 verlassende Flachdraht mit der in Fig. 4C gezeigten Querschnittsform kann noch durch ein zur Kalibrierung dienendes Rollenwalzenpaar 22 hindurchgeführt und dort in seiner Breite auf die Breite der in den Elektrodenträgerrollen 13 und 15 vorgesehenen, nicht dargestellten Führungsnuten kalibriert werden. Bei dieser Kalibrierung werden im wesentlichen die beiden Schmalseiten des in Fig. 4C im Querschnitt dargestellten Flachdrahtes noch etwas abgeplattet. Wegen der grossen Härte des Drahtes muss aber darauf geachtet werden, dass keine zu starke Kalibrierung vorgenommen wird, weil andernfalls die Gefahr einer Krümmung der Flachseiten des Drahtes entsteht.

Anschliessend durchläuft der Elektrodendraht 2 das Drahtspannaggregat 14, durch das in dem Draht in bekannter Weise im Zusammenwirken mit der Walzeinrichtung 6 bis 11 eine vorbestimmte Drahtspannung erzeugt und aufrechterhalten wird. Als den Draht zurückhaltendes Organ wirkt dabei die Walzeinrichtung, und die Drahtspannung wird im Prinzip durch eine Art federbelasteter Umlenkrolle für den Elektrodendraht 2 erzeugt, durch deren veränderliche Position die Walzgeschwindigkeit der Walzeinrichtung derart eingeregelt wird, dass die Drahtlänge zwischen Rollenwalzenpaar und Umlenkrolle im wesentlichen konstant bleibt. Wenn die genannte vorbestimmte Drahtspannung über dem Wert liegt, der für die Drahtspannung am Ausgang der Walzeinrichtung für den Walzvorgang am günstigten ist, dann kann zwischen dem Rollenwalzenpaar 6, 7 und dem Drahtspannaggregat 14 noch eine von dem Elektrodendraht 2 zu durchlaufende, nicht gezeigte Drahtbremse eingeschaltet werden, durch die die Drahtspannung auf der Seite des Rollenwalzenpaares 6, 7 herabgesetzt wird.

Nach Verlassen des Drahtspannaggregates 14 wird der Elektrodendraht der ersten Elektrodenträgerrolle 13 zugeführt. Dabei empfiehlt es sich, den Elektrodendraht ähnlich wie in Fig. 2 gezeigt so in die Führungsnut der Elektrodenträgerrolle einzuführen, dass der Elektrodendraht von Erreichen der Schweissstelle nicht oder nur ganz leicht auf dem Grund der Führungsnut aufliegt, weil dann nämlich etwaige an der Schweissstelle auftretende Drahtdehnungen durch die Drahtspannung rückwärts aus der Schweissstelle herausgezogen werden können, ohne dass damit gleichzeitig auch auf die Elektrodenträgerolle 13 eine überlagerte Rückwärtsbewegung übertragen wird, so dass man auf diese Weise ohne Schwierigkeiten zu vollständig gleichen Umfangsgeschwindigkeiten der beiden Elektrodenträgerrollen gelangen kann.

An der Schweissstelle erhitzt sich der Elektrodendraht 2 wegen seiner gegenüber einem direkt flachgewalzten Draht wesentlich geringeren Dicke und seines entsprechend geringeren ohmschen Widerstandes für den durchfliessenden Schweissstrom wesentlich weniger als ein direkt flachgewalzter Draht, und aufgrund dieser geringeren Erhitzung ergibt sich, zusätzlich zu der durch die Erhöhung der Drahtfestigkeit an der Elastizitätsgrenze erzielten Vergrösserung des Sicherheitsabstandes zwischen Arbeitspunkt und Elastizitätsgrenze im Spannungs-Dehnungs-Diagramm des Elektrodendrahtes, eine weitere Vergrösserung dieses Sicherheitsabstandes und damit aus den oben schon erläuterten Gründen eine weitere Erhöhung der Betriebssicherheit bzw.

eine noch unkritischere Einstellung der Betriebsdaten.

Nach Verlassen der ersten Elektrodenträgerrolle 13 wird der Elektrodendraht 2 dann der zweiten Elektrodenträgerrolle 15 zugeführt, wo er sich ebenfalls an der Schweissstelle wesentlich weniger als ein direkt flachgewalzter Draht erhitzt, und nach Verlassen derselben durchläuft der Elektrodendraht 2 dann noch in üblicher Weise die Drahtspannvorrichtung 18 und die Drahtfördereinrichtung 17, deren Aufbau und Funktionen ja oben schon erläutert worden sind, und danach wird der Elektrodendraht 2 einem nicht dargestellten Drahtzerhacker zugeführt.

Wie oben schon erwähnt, hängt das Resultat des vorliegenden Verfahrens natürlich nicht davon ab, an welchem Ort die einzelnen Schritte der Kaltverformung des Elektrodendrahtes vorgenommen werden, so dass es im Rahmen des vorliegenden Verfahrens auch möglich wäre, den bzw. die Ziehschritte in das Herstellerwerk des Elektrodendrahtes zu verlegen. Allerdings müsste dann der Elektrodendraht vom Herstellerwerk und auch vom Benutzer des vorliegenden Verfahrens im harten Zustand, im obigen Ausführungsbeispiel also z. B. mit einer Drahtfestigkeit an der Elastizitätsgrenze von ca. 30 kg/mm², gehandhabt werden, und dabei ergeben sich gewisse Probleme, weil z. B. das Einlegen eines harten Drahtes in einen topfförmigen Behälter wie den Behälter 21 in Fig. 2, wenn überhaupt, nur unter beträchtlichen Schwierigkeiten möglich wäre und auch das Abziehen eines harten Drahtes aus einem solchen Behälter nicht unproblematisch wäre, weil ein aus einem solchen Behälter abgezogener harter Draht die Tendenz hätte, seine Wendelform aufrechtzuerhalten, und sich daher bei der Einführung des Drahtes in die Schweissmaschine Schwierigkeiten ergeben würden. In einem solchen Fall, wenn also der bzw. die Ziehschritte des vorliegenden Verfahrens im Herstellerwerk vorgenommen werden, empfiehlt es sich, zur Drahtspeicherung eine Spule wie die Spule 23 in Fig. 3 zu benutzen, weil auf eine solche Spule auch harter Draht ohne Schwierigkeiten vom Herstellerwerk aufgewickelt werden kann und das Abziehen des harten Drahtes von der Spule 23 wie in Fig. 3 gezeigt mittels einer Art drehbaren Galgens vorgenommen werden kann. In der Fig. 3 besteht der drehbare Galgen aus einem möglichst schwach gekrümmten Rohr 24, durch das der abzuziehende Draht 2 hindurchgezogen wird und das mit seinem Auslauf 25 an einer um die Achse der Spule 25 drehbar gelagerten rohrförmigen Welle 26 befestigt ist. Wenn der Draht 2 durch das Rohr 24 abgezogen wird, dreht sich das Rohr 24 in der Drehrichtung 27 um die Achse der Spule 23, und der trompetenförmige Einlauf 28 läuft dann um die den Drahtvorrat 5 bildende Drahtwicklung der Spule 23 herum und wickelt dabei den Draht von der Spule 23 ab, wobei der abgewickelte Draht von der Mündung des trompetenförmigen Einlaufs 28 des Rohres 24 aufgenommen wird. Um Reibungsverluste und Abrieb innerhalb des Rohres 24 auszuschalten, können in der Rohrwand des Rohres 24 nicht dargestellte kleine Walzen angeordnet sein, so dass der Draht 2 nicht an der Rohrwand schleift sondern über diese kleinen rollenden Walzen geführt wird. Auf diese Weise ist ein einfaches Abziehen des harten Drahtes von der Spule 23 möglich, ohne dass der harte Draht dabei — wie das bei einer Führung über Umlenkrollen erforderlich wäre — stark gekrümmt werden muss. Die Benutzung eines Drahtspeichers mit einer drehbaren Abzugsvorrichtung wie in Fig. 3 ermöglicht also sowohl für das Herstellerwerk des Elektrodendrahtes 2 wie auch für den Benutzer des vorliegenden Verfahrens eine einfache Handhabung von hartem Elektrodendraht und somit die Verlegung des bzw. der Ziehschritte der ersten Verformungsstufe des vorliegenden Verfahrens oder eines Teiles dieser Ziehschritte in das Herstellerwerk des Elektrodendrahtes.

Es sei abschliessend noch darauf hingewiesen, dass der Begriff « weichgeflühter Draht » hier einen Draht mit der Drahtfestigkeit eines weichgeglühten Drahtes definiert (also z. B. weichgeglühten Kupferdraht mit einer Drahtfestigkeit von 8,5 kg/mm² an der Elastisitätsgrenze) und nicht etwa den konkreten Verfahrensschritt des Weichglühens beinhaltet.

**Patentansprüche**

1. Verfahren zum elektrischen Widerstandsrollennahtschweissen mit Hilfe von nur einem Elektrodendraht (2), der von einem Drahtvorrat (5) abgezogen wird und in einer Widerstandsrollennaht-Schweissmaschine zuerst über eine erste und dann über eine zweite gegeneinander pressbaren Elektrodenträgerrollen (13, 15) läuft und dessen Festigkeit zwecks Verhütung einer Bildung von Drahtschlaufen zwischen den beiden Elektrodenträgerrollen (13, 15) vor seinem Einlauf in die erste Elektrodenträgerrolle (13) durch Kaltverformung erhöht wird und dessen Drahtquerschnitt vor seinem Einlauf in die erste Elektrodenträgerrolle (13) in der Querschnittfläche verringert und von einer im wesentlichen kreisrunden in eine flache Querschnittform mit einer gegenüber dem Durchmesser des runden Drahtes grösseren Breite und geringeren Höhe des abgeflachten Drahtes überführt wird, dadurch gekennzeichnet, dass die Kaltverformung in mehreren Schritten durchgeführt wird und der Elektrodendraht (1) hierzu vor seinem Einlauf in die erste Elektrodenträgerrolle (13) in einer ersten Verformungsstufe (13) durch Ziehen und danach in einer zweiten Verformungsstufe (6, 7) durch Walzen kaltverformt wird und dass der Elektrodendraht (1) in der ersten Verformungsstufe (3) über seinen gesamten Drahtquerschnitt im wesentlichen gleichmässig verformt wird und hierzu seine genannte, im wesentlichen kreisrunde Querschnittsform während der Kaltverformung in der ersten Verformungsstufe (3) aufrechterhalten wird und in dieser ersten Verformungsstufe (3) nur der Drahtdurchmesser verringert wird und dass diese Durchmesserverringerung derart bemessen wird, dass der überwiegende Teil der Festigkeitsdifferenz zwischen der Drahtfestigkeit an der Elastizitätsgrenze nach der zweiten Verformungsstufe (6, 7) und der Drahtfestigkeit von weichgeglühtem Draht an der Elastizitätsgrenze auf den Festigkeitsunterschied zwischen der Drahtfestigkeit an der Elastizitätsgrenze nach der ersten Verformungsstufe (3) und der Drahtfestigkeit von weichgeglühtem Draht an der Elastizitätsgrenze und somit auf die erste Verformungsstufe (3) mit der genannten, über den gesamten Drahtquerschnitt im wesentlichen gleichmässigen Verformung des Elektrodendrahtes entfällt, und dass die Querschnittsform des Elektrodendrahts erst in der zweiten Verformungsstufe (6, 7) in die genannte flache Querschnittsform überführt wird und der Elektrodendraht dabei mindestens so weit abgeflacht wird, dass die sich mit dieser Abflachung in der zweiten Verformungsstufe (6, 7) ergebende Verbreiterung des Elektrodendrahtes prozentual grösser als die sich mit dem Walzen in der zweiten Verformungsstufe (6, 7) ergebene prozentuale Verlängerung des Elektrodendrahtes wird.

2. Verfahren nach Anspruch 1, dadurch gekennzeichnet, dass die Durchmesserverringerung in der ersten Verformungsstufe derart bemessen wird, dass mindestens 60 %, vorzugsweise mehr als 75 %, der Festigkeitsdifferenz zwischen der Drahtfestigkeit an der Elastizitätsgrenze nach der zweiten Verformungsstufe (6, 7) und der Drahtfestigkeit von weichgeglühtem Draht (2) an der Elastizitätsgrenze auf den Festigkeitsunterschied zwischen der Drahtfestigkeit an der Elastizitätsgrenze nach der ersten Verformungsstufe (3) und der Drahtfestigkeit von weichgeglühtem Draht (2) an der Elastizitätsgrenze entfallen.

3. Verfahren nach Anspruch 1 oder 2, dadurch gekennzeichnet, dass die Durchmesserverringerung in der ersten Verformungsstufe (3) derart bemessen wird, dass der überwiegende Teil der sich insgesamt in den beiden Verformungsstufen (3, 6, 7) ergebenden Erhöhung der Drahtfestigkeit an der Elastizitätsgrenze auf die erste Verformungsstufe (3) entfällt.

4. Verfahren nach einem der Ansprüche 1 bis 3, dadurch gekennzeichnet, dass die Durchmesserverringerung in der ersten Verformungsstufe (3) derart bemessen wird, dass der überwiegende Teil, vorzugsweise mehr als 75 %, der sich insgesamt in den beiden Verformungsstufen (3, 6, 7) ergebenden Verringerungen der Querschnittsfläche des Drahtquerschnittes auf die erste Verformungsstufe (3) entfällt.

5. Verfahren nach einem der Ansprüche 1 bis 4, dadurch gekennzeichnet, dass der Elektrodendraht (2) in der zweiten Verformungsstufe (6, 7) so weit abgeflacht wird, dass der sich mit dieser Abflachung in der zweiten Verformungsstufe (6, 7) ergebende Prozentsatz der Verbreiterung des Elektrodendrahtes (2) mindestens dreimal so gross, vorzugsweise mehr als fünfmal so gross wie der sich mit dem Walzen in der zweiten Verformungsstufe (6, 7) ergebende Prozentsatz der Verlängerung des Elektrodendrahtes wird.

6. Verfahren nach einem der Ansprüche 1 bis 5, dadurch gekennzeichnet, dass der Elektrodendraht (2) in der zweiten Verformungsstufe (6, 7) mindestens so weit abgeflacht wird, dass seine Breite grösser, vorzugsweise um mehr als 25 % grösser, als der Durchmesser des von dem Drahtvorrat (5) abgezogenen Drahtes (2) wird.

7. Verfahren nach einem der Ansprüche 1 bis 6, dadurch gekennzeichnet, dass mindestens ein Teil von das Walzen in der zweiten Verformungsstufe (6, 7) bewirkenden Walzmittel mittels eines mindestens einen Teil der für das Walzen erforderlichen Verformungsarbeit leistenden Motors (9) angetrieben wird.

8. Verfahren nach Anspruch 7, dadurch gekennzeichnet, dass die für das Ziehen in der ersten Verformungsstufe (3) erforderliche Zugkraft mindestens teilweise dadurch erzeugte wird, dass von das Walzen in der zweiten Verformungsstufe (6, 7) bewirkenden Walzmitteln auf den Draht (2) zusätzlich zu einem das Walzen bewirkenden Walzendruck eine Zugkraft in Richtung der Fortbewegung des Drahtes (2) ausgeübt wird, die grösser als die Differenz zwischen dem Produkt aus dem der ersten Verformungsstufe (3) hervorgehenden Drahtquerschnitt und der Spannung an der Elastizitätsgrenze des von dem Drahtvorrat (5) abgezogenen Drahtes (2) und dem Produkt aus Drahtquerschnitt und Drahtspannung unmittelbar nach der zweiten Verformungsstufe (6, 7) und kleiner als die Differenz zwischen dem Produkt aus Drahtquerschnitt und Zugfestigkeit des Drahtes (2) unmittelbar nach der ersten Verformungsstufe (3) und dem Produkt aus Drahtquerschnitt und Drahtspannung unmittelbar nach der zweiten Verformungsstufe (6, 7) ist.

9. Verfahren nach Anspruch 8, dadurch gekennzeichnet, dass eine Walze (6) der die genannte Zugkraft auf den Draht (2) ausübenden Walzmittel zwecks ausreichender Kraftübung auf den Draht (2) über einen Teil ihres Umfanges von dem Draht (2) umschlungen wird.

10. Verfahren nach Anspruch 9, dadurch gekennzeichnet, dass der Umschlingungswinkel, über den der Draht (2) die genannte Walze (6) umschlingt, derart bemessen wird, dass das Produkt aus dem im Bogenmass gemessenen Umschlingungswinkel und dem Gleitreibungskoeffizienten zwischen der genannten Walze (6) und dem diese umschlingenden Draht (2) mindestens gleich dem um den Wert Eins verminderten Verhältnis der Produkte aus Drahtspannung und Drahtquerschnitt vor Beginn der Umschlingung und nach der am Ende der Umschlingung befindlichen Walzstelle ist.

11. Verfahren nach einem der Ansprüche 1 bis 10, dadurch gekennzeichnet, dass der Elektrodendraht (2) auf seinem Wege vom Drahtvorrat (5) zur ersten Elektrodenträgerrolle (13) vor seinem Einlauf in das erste der von ihm durchlaufenen Kaltverformungsmittel zur Erzielung einer ausreichenden Drahtspannung eine den durchlaufenden Draht (2) zurückhaltende Vorrichtung, vorzugsweise eine Drahtbremse (4) durchläuft.

12. Verfahren nach einem der Ansprüche 1 bis 11, dadurch gekennzeichnet, dass es nur zwei Kaltverformungsschritte in Form eines einzigen Ziehschrittes in der ersten Verformungsstufe (3) sowie einem einzigen Walzschrittes in der zweiten Verformungsstufe (6, 7) umfasst.

13. Verfahren nach einem der Ansprüche 1 bis 11, dadurch gekennzeichnet, dass es mehr als zwei Kaltverformungsschritte umfasst, so dass die Kaltverformung in mindestens einer der beiden Verformungsstufen (3, 6, 7) in mehreren Schritten vorgenommen wird.

14. Verfahren nach Anspruch 13, dadurch gekennzeichnet, dass die erste Verformungsstufe (3) mehrere Ziehschritte umfasst.

15. Verfahren nach Anspruch 14, dadurch gekennzeichnet, dass die zweite Verformungsstufe (6, 7) nur einen einzigen Walzschritt umfasst.

16. Verfahren nach einem der Ansprüche 1 bis 15, dadurch gekennzeichnet, dass mindestens ein Teil der Kaltverformungsschritte, denen der Elektrodendraht (2) unterworfen wird, auf dem Wege des Elektrodendrahtes (2) von dem Drahtvorrat (5) zu der ersten Elektrodenträgerrollen (13) vorgenommen wird.

17. Verfahren nach einem der Ansprüche 1 bis 16, dadurch gekennzeichnet, dass bei dem Verfahren von weichgeglühtem Draht (2) ausgegangen wird.

18. Verfahren nach Anspruch 17, dadurch gekennzeichnet, dass der von dem Drahtvorrat (5) abgezogene Draht (2) weicher Runddraht ist.

19. Verfahren nach einem der Ansprüche 1 bis 18, dadurch gekennzeichnet, dass als Elektrodendraht (2) Kupferdraht verwendet wird.

20. Widerstandsrollennaht-Schweissmaschine mit wenigstens einer Kaltverformungsstufe, mit einem zuerst über eine erste und dann über eine zweite von zwei gegeneinander pressbaren Elektrodenträgerrollen (13, 15) laufenden Elektrodendraht (2) und Kaltverformungsmitteln zur Erhöhung der Drahtfestigkeit und Verminderung der Drahtquerschnittsfläche sowie zur Ueberführung der Drahtquerschnittsform von einer im wesentlichen kreisrunden in eine flache Querschnittsform vor Einlauf des Elektrodendrahtes (2) in die erste Elektrodenträgerrolle (13), gekennzeichnet durch eine eine erste Verformungsstufe bildende Zieheinrichtung (3) mit mindestens einer Ziehdüse (1) und durch Walzmittel (6, 7, 8, 9, 10, 11) mit durch einen Motor (9) angetriebenen Walzen (6, 7) zur Kaltverformung in einer zweiten Verformungsstufe.

21. Schweissmaschine nach Anspruch 20, dadurch gekennzeichnet, dass die Walzmittel ein Rollenwalzenpaar (6, 7) sowie Antriebsmittel (8, 9, 10, 11) für beide Walzen (6, 7) desselben umfassen und die Antriebsmittel einen Motor (9) und Steuerungsmittel zur Steuerung der Drehzahl desselben sowie Kraftübertragungsmittel (10) zwischen dem Motor (9) und den beiden Walzen (6, 7) mit einem im Kraftfluss zwischen einer der beiden Walzen (6) und dem Motor (9) liegenden Umkehrgetriebe (8) umfassen.

22. Schweissmaschine nach Anspruch 21, dadurch gekennzeichnet, dass zur Erzielung einer vorbestimmten Drahtspannung des Elektrodendrahtes (2) nach Verlassen der Walzmittel (6, 7, 8, 9, 10, 11) ein Drahtspannaggregat (14) mit Mitteln zur Erzeugung der Drahtspannung, Mitteln zur Messung der Regelabweichung zwischen Ist- und Sollwert der Drahtspannung und Mitteln zur Uebertragung der Regelabweichung als Steuergrösse auf die Steuermittel zur Steuerung der Drehzahl des Motors (9) zum Zwecke einer derartigen Einregelung der Motordrehzahl und damit der Drehzahl der Walzen (6, 7), dass die Regelabweichung vernachlässigbar klein und damit die Drahtspannung nahezu konstant wird, vorgesehen ist.

23. Schweissmaschine nach Anspruch 22, gekennzeichnet durch Drahtführungsmittel zu einer derartigen Drahtführung im Bereich der Walzmittel (6, 7, 8, 9, 10, 11), dass eine (6) der von dem Motor (9) angetriebenen Walzen (6, 7) über einen Teil ihres Umfanges von dem Elektrodendraht (2) umschlungen ist und dadurch mindestens ein Teil der für das Ziehen in der ersten Verformungsstufe erforderlichen Zugkraft auf den Draht übertragen wird.

24. Schweissmaschine nach einem der Ansprüche 20 bis 23, gekennzeichnet durch eine Drahtbremse (4) im Bereich zwischen Drahtvorrat (5) und der ersten Verformungsstufe (3).

25. Schweissmaschine nach einem der Ansprüche 20 bis 24, gekennzeichnet durch einen Drahtspeicher zur Speicherung des Drahtvorrates (5), vorzugsweise in Form eines topfförmigen Behälters mit einem zur Drahtspeicherung dienenden ringförmigen Hohlraum oder einer liegenden Spule mit drehbarem Galgen als Abzugsmittel.

**Claims**

1. Process for electrical resistance roller seam welding with the use of only one electrode wire (2) which is drawn off from a wire supply (5) and, in a resistance roller seam welding machine, runs first over a first and then over a second electrode support roller (13, 15), said first and second rollers being adapted to be pressed towards one another, and whose strength is increased by cold working in order to prevent formation of wire loops between the two electrode support rollers (13, 15) before it arrives at the first electrode support roller (13), and whose wire cross-section is reduced in its cross-sectional area before it arrives at the first electrode support roller (13), and is converted from a substantially circular cross-sectional form to a flat cross-sectional form with the flattened wire being of greater width and lesser height relatively to the diameter of the round wire, characterised in that the cold working is carried out in a plurality of stages, and for this purpose the electrode wire (1) is cold worked by drawing before it arrives at the first electrode support roller (13) in a first deformation stage (13) and then by rolling in a second deformation stage (6, 7) and that in the first deformation stage (3) the electrode wire (1) is deformed substantially over its entire wire cross-section and for this purpose its said substantially circular cross-sectional form is maintained during the cold working in the first deformation stage (3), and only the wire diameter is reduced in this first deformation stage (3), and that this diameter reduction is so dimensioned that the preponderant part of the strength difference between the wire strength at the elastic limit after the second deformation stage (6, 7) and the wire strength of soft annealed wire at the elastic limit is assigned to the strength difference between the wire strength at the elastic limit after the first deformation stage (3) and the wire strength of soft-annealed wire at the elastic limit and thus to the first deformation stage (3) with the said deformation of the electrode wire substantially uniformly over the entire wire cross-section, and that the cross-sectional form of the electrode wire is not converted to the said flat cross-sectional form until in the second deformation stage (6, 7), and the electrode wire in this case is flattened at least to such an extent that the widening of the electrode wire produced with this flattening in the second deformation stage (6, 7) is percentagewise greater than the percentage lengthening of the electrode wire which is brought about with the rolling in the second deformation stage (6, 7).

2. Process according to claim 1, characterised in that the diameter reduction in the first deformation stage is so dimensioned that at least 60 %, preferably more than 75 %, of the strength difference between the wire strength at the elastic limit after the second deformation stage (6, 7) and the wire strength of soft-annealed wire (2) at the elastic limit is assigned to the strength difference between the wire strength at the elastic limit after the first deformation stage (3) and the wire strength of soft-annealed wire (2) at the elastic limit.

3. Process according to claim 1 or 2, characterised in that the diameter reduction in the first deformation stage (3) is so dimensioned that the preponderant part of the total increase in wire strength at the elastic limit produced in the two deformation stages (3, 6, 7) is assigned to the first deformation stage (3).

4. Process according to one of claims 1 to 3, characterised in that the diameter reduction in the first deformation stage (3) is so dimensioned that the preponderant part, preferably more than 75 %, of the total reductions in the cross-sectional area of the wire cross-section which are brought about in the two deformation stages (3, 6, 7) is assigned to the first deformation stage (3).

5. Process according to one of claims 1 to 4, characterised in that the electrode wire (2) is flattened to such an extent in the second deformation stage (6, 7) that that percentage of the widening of the electrode wire (2) which is produced with this flattening in the second deformation stage (6, 7) is at least three times as great as, preferably more than five times as great as, that percentage of the elongation of the electrode wire which is produced with the rolling in the second deformation stage (6, 7).

6. Process according to one of claims 1 to 5, characterised in that the electrode wire (2) is flattened at least to such an extent in the second deformation stage (6, 7) that its width is greater than, preferably greater by more than 25 % than, the diameter of the wire (2) drawn off from the wire supply (5).

7. Process according to one of claims 1 to 6, characterised in that at least some of the rolling means effecting the rolling in the second deformation stage (6, 7) is driven by means of a motor (9) performing at least part of the deformation work required for the rolling.

8. Process according to claim 7, characterised in that the tensile force required for the drawing in the first deformation stage (3) is produced at least partly by arranging that the rolling means carrying out the rolling in the second deformation stage (6, 7) exert on the wire (2), additionally to a rolling pressure carrying out the rolling, a tensile force in the direction of the onward movement of the wire (2) which is greater than the difference between the product of on the one hand the wire cross-section resulting from the first deformation stage (3) and on the other hand the tension at the elastic limit of the wire (2) drawn off from the wire supply (5) and the product of wire cross-section and wire tension immediately after the second deformation stage (6, 7), and smaller than the difference between the product of the wire cross-section and the tensile strength of the wire (2) immediately after the first deformation stage (3) and the product of wire cross-section and wire tension immediately after the second deformation stage (6, 7).

9. Process according to claim 8, characterised in that a roll (6) of the rolling means which subject the wire (2) to the said tensile force has part of its periphery looped about by the wire (2) in order to achieve adequate exertion of force on the wire (2).

10. Process according to claim 9, characterised in that the envelope angle through which the wire (2) loops about the said roll (6) is so dimensioned that the product of on the one hand the envelope angle measured at the arc dimension and on the other hand the coefficient of sliding friction between the said roll (6) and the wire (2) looping thereabout is at least equal to the ratio, minus the value one, of the products of wire tension and wire cross-section before the start of the envelopment and after the rolling zone situated at the end of the envelopment.

11. Process according to one of claims 1 to 10, characterised in that the electrode wire (2) on its way from the wire supply (5) to the first electrode support roller (13), before it arrives at the first of the cold working means through which it travels, passes through a device which holds back the through-travelling wire (2), preferably a wire brake (4), in order to achieve an adequate wire tension.

12. Process according to one of claims 1 to 11, characterised in that it comprises only two working steps, in the form of a single drawing step in the first deformation stage (3) and a single rolling step in the second deformation stage (6, 7).

13. Process according to one of claims 1 to 11, characterised in that it comprises more than two cold working steps, so that the cold working steps, so that the cold working is carried out in at least one of the two deformation stages (3, 6, 7) in a plurality of steps.

14. Process according to claim 13, characterised in that the first deformation stage (3) comprises a plurality of drawing steps.

15. Process according to claim 14, characterised in that the second deformation stage (6, 7) comprises only a single rolling step.

16. Process according to one of claims 1 to 15, characterised in that at least part of the cold working steps to which the electrode wire (2) is subjected is effected on the path of travel of the electrode wire (2) from the wire supply (5) to the first electrode support rollers (13).

17. Process according to one of claims 1 to 16, characterised in that the process starts with soft-annealed wire (2).

18. Process according to claim 17, characterised in that the wire (2) drawn from the wire supply (5) is soft round wire.

19. Process according to one of claims 1 to 18, characterised in that copper wire is used as the electrode wire (2).

20. Resistance roller seam welding machine with at least one cold working stage, with an electrode wire (2) travelling first over a first and then over a second of two electrode support rollers (13, 15) pressable towards one another, and cold working means for increasing the wire strength and reducing the wire cross-sectional area, and for converting the wire cross-section shape from a substantially circular to a flat cross-sectional shape before the electrode wire (2) arrives at the first electrode support roller (13), characterised by a drawing device (3) forming a first deformation stage and with at least one drawing nozzle (1) and by rolling means (6, 7, 8, 9, 10, 11) with rolls (6, 7) driven by a motor (9), for cold working in a second deformation stage.

21. Welding machine according to claim 20, characterised in that the rolling means comprise a pair of rolls (6, 7) and also drive means (8, 9, 10, 11) for both rolls (6, 7) thereof, and the drive means comprise a motor (9) and control means for controlling the rotational speed thereof, and also force transmission means (10) between the motor (9) and the two rolls (6, 7), with a reversing gear (8) situated in the line of drive between one of the two rolls (6) and the motor (9).

22. Welding machine according to claim 21, characterised in that for achieving a predetermined wire tension in the electrode wire (2) after issuing from the rolling means (6, 7, 8, 9, 10, 11) a wire tensioning apparatus (14) is provided, with means for producing the wire tension, means for measuring the control deviation between the actual and desired values of wire tension, and means for transmitting the deviation as a regulating variable to the control means for controlling the rotational speed of the motor (9) for the purpose of such control of the motor rotational speed and thus of the rotational speed of the rolls (6, 7) that the deviation is negligibly small, and thus the wire tension is approximately constant.

23. Welding machine according to claim 22, characterised by wire guide means for so guiding the wire in the region of the rolling means (6, 7, 8, 9, 10, 11) that one (6) of the rolls (6, 7) which are driven by the motor (9) has the electrode wire (2) looped about part of its periphery, and thereby at least part of the tensile force required for the drawing operation in the first deformation stage is transmitted to the wire.

24. Welding machine according to one of claims 20 to 23, characterised by a wire brake (4) in the region between the wire supply (5) and the first deformation stage (3).

25. Welding machine according to one of claims 20 to 24, characterised by a wire storage device for storing the wire supply (5), preferably in the form of a pot-shaped container with an annular hollow space serving for wire storage or with a horizontally disposed reel with a rotatable bracket as drawing-off means.

**Revendications**

1. Procédé pour réaliser le soudage par résistance électrique à la molette à l'aide de seulement un fil-électrode (2), qui est dévidé d'une réserve de fil (5) et circule, dans une machine à souder par résistance à la molette, tout d'abord sur un premier, puis sur un second galet de support d'électrodes (13, 15), pouvant être repoussés l'un contre l'autre, et dont la solidité est accrue par déformation à froid avant sa pénétration dans le premier galet de support d'électrode (13), afin d'empêcher une formation de boucles de fil entre les deux galets de support d'électrodes (13, 15) et dont la section transversale possède une surface diminuant avant la pénétration du fil dans le premier galet de support d'électrode (13) et passe d'une forme sensiblement circulaire à une forme aplatie, le fil aplati possédant une largeur supérieure au diamètre du fil rond et une hauteur plus faible, caractérisé en ce que la déformation à froid est exécutée en plusieurs étapes opératoires et qu'avant sa pénétration dans le premier galet de support d'électrode (13), le fil-électrode (1) est déformé à froid par étirage dans un premier poste de déformation (3), puis par laminage dans un second poste de déformation (6, 7) et que dans le premier poste de déformation (3) le fil-électrode (1) est déformé sensiblement uniformément sur toute sa section transversale et qu'à cet effet sa forme en coupe transversale sensiblement circulaire, mentionnée, est maintenue pendant la déformation à froid dans le premier poste de déformation (3) et que seul le diamètre du fil est réduit dans ce premier poste de déformation (3), et que cette réduction du diamètre est dimensionnée de manière que la majeure partie de la différence entre la résistance mécanique du fil à la limite d'élasticité en aval du second poste de déformation (6, 7) et la résistance mécanique du fil recuit à la limite d'élasticité, est due à la différence entre la résistance mécanique du fil à la limite d'élasticité en aval du premier poste de déformation (3) et la résistance mécanique du fil recuit à la limite d'élasticité et par conséquent est imputable au premier poste de déformation (3), ladite déformation du fil-électrode étant sensiblement uniforme sur toute la section transversale de ce fil, et que la forme en coupe transversale du fil-électrode est convertie en ladite forme en coupe transversale aplatie uniquement dans le second poste de déformation (6, 7) et que le fil-électrode est aplati au moins au point que l'élargissement du fil-électrode, qui est obtenu avec cet aplatissement dans le second poste de déformation (6, 7), est supérieur en pourcentage à l'allongement en pourcentage du fil-électrode, obtenu lors du laminage dans le second poste de déformation (6, 7).

2. Procédé selon la revendication 1, caractérisé en ce que la réduction du diamètre dans le premier poste de déformation est dimensionnée de manière qu'au moins 60 % et de préférence plus de 75 % de la différence entre la résistance mécanique du fil à la limite d'élasticité en aval du second poste de déformation (6, 7) et la résistance mécanique du fil recuit (2) à la limite d'élasticité est imputable à la différence entre la résistance mécanique du fil à la limite d'élasticité en aval du premier poste de déformation (3) et la résistance mécanique du fil recuit (2) à la limite d'élasticité.

3. Procédé selon la revendication 1 ou 2, caractérisé en ce que la réduction de diamètre dans le premier poste de déformation (3) est dimensionnée de telle sorte que la majeure partie de l'accroissement de la résistance mécanique du fil à la limite d'élasticité, que l'on obtient globalement dans les deux postes de déformation (3, 6, 7), est imputable au premier poste de déformation (3).

4. Procédé selon l'une des revendications 1 à 3, caractérisé en ce que la réduction du diamètre dans le premier poste de déformation (3) est dimensionnée de telle sorte que la majeure partie, de préférence plus de 75 %, des réductions de la surface en coupe transversale du fil, qui sont obtenues globalement dans les deux postes de déformation (3, 6, 7), sont imputables au premier poste de déformation (3).

5. Procédé selon l'une des revendications 1 à 4, caractérisé en ce que le fil-électrode (2) est aplati dans le second poste de déformation (6, 7) au point que le pourcentage d'élargissement du fil-électrode (2), qui est obtenu avec cet aplatissement dans le second poste de déformation (6, 7), est égal au moins au triple et de préférence à plus du quintuple du pourcentage d'allongement du fil-électrode que l'on obtient avec le laminage dans le second poste de déformation (6, 7).

6. Procédé selon l'une des revendications 1 à 5, caractérisé en ce que le fil-électrode (2) est aplati dans le second poste de déformation (6, 7) au moins au point que sa largeur devient supérieure, de préférence de plus de 25 %, au diamètre du fil (2) dévidé de la réserve de fil (5).

7. Procédé selon l'une des revendications 1 à 6, caractérisé en ce qu'au moins une partie des moyens de laminage, qui réalisent le laminage dans le second poste de déformation (6, 7), est entraînée par un moteur (9) qui se charge d'au moins une partie du travail de déformation nécessaire pour le laminage.

8. Procédé selon la revendication 7, caractérisé en ce que la force de traction, qui est nécessaire pour l'étirage dans le premier poste de déformation (3), est produite au moins partiellement par le fait que les moyens de laminage qui réalisent le laminage dans le second poste de déformation (6, 7) exercent sur le fil (2), outre une pression de laminage provoquant le laminage, une force de traction dirigée dans la direction de déplacement du fil (2) et qui est supérieure à la différence entre le produit de la section transversale du fil obtenu dans le premier poste de déformation (3) par la tension à la limite d'élasticité du fil (2) dévidé de la réserve de fil (5), et le produit de la section transversale du fil par la tension du fil directement en aval du second poste de déformation (6, 7) et est inférieure à la différence entre le produit de la section transversale du fil par la résistance à la traction du fil (2) directement en aval du premier poste de déformation (3) et le produit de la section transversale du fil par la tension du fil directement en aval du second poste de déformation (6, 7).

9. Procédé selon la revendication 8, caractérisé en ce que dans le but d'obtenir l'application d'une force suffisante au fil (2), ce dernier s'enroule sur une partie de la circonférence d'un cylindre (6) des moyens de laminage exerçant ladite force de traction sur le fil (2).

10. Procédé selon la revendication 9, caractérisé en ce que l'angle d'enroulement, sous lequel le fil (2) s'enroule autour dudit cylindre (6), est dimensionné de telle sorte que le produit de l'angle d'enroulement mesuré sous la forme d'une longueur d'arc par le coefficient de frottement avec glissement entre ledit cylindre (6) et le fil (2) entourant ce cylindre est égal au moins au rapport, diminué de la valeur, un des produits de la tension du fil par la section transversale du fil avant le début de l'enroulement et après la zone de laminage située à l'extrémité de l'enroulement.

11. Procédé selon l'une des revendications 1 à 10, caractérisé en ce que, sur son trajet de déplacement depuis la réserve de fil (5) jusqu'au premier galet de support d'électrode (13) et avant son entrée dans le premier des moyens de déformation à froid qu'il traverse, le fil-électrode (2) traverse, afin d'être placé à une tension suffisante, un dispositif retenant le fil courant (2), de préférence un frein (4) pour fil.

12. Procédé selon l'une des revendications 1 à 11, caractérisé en ce qu'il comprend uniquement deux étapes de déformation à froid se présentant sous la forme d'une seule étape d'étirage dans le premier poste de déformation (3) et d'une seule étape de laminage dans le second poste de déformation (6, 7).

13. Procédé selon l'une des revendications 1 à 11, caractérisé en ce qu'il comprend plus de deux étapes de déformation à froid de sorte que la déformation à froid est réalisée en plusieurs étapes dans au moins l'un des deux postes de déformation (3, 6, 7).

14. Procédé selon la revendication 13, caractérisé en ce que le premier poste de déformation (3) met en œuvre plusieurs étapes d'étirage.

15. Procédé selon la revendication 14, caractérisé en ce que le second poste de déformation (6, 7) ne met en œuvre qu'une seule étape de laminage.

16. Procédé selon l'une des revendications 1 à 15, caractérisé en ce qu'au moins une partie des étapes de déformation à froid, auquel le fil-électrode (2) est soumis, est réalisée sur le trajet du fil-électrode (2) s'étendant depuis la réserve de fil (5) jusqu'au premier rouleau porte-électrode (13).

17. Procédé selon l'une des revendications 1 à 16, caractérisé en ce que, dans ce procédé, on part d'un fil recuit (2).

18. Procédé selon la revendication 17, caractérisé en ce que le fil (2) dévidé de la réserve de fil (5) est un fil cylindrique mou.

19. Procédé selon l'une des revendications 1 à 18, caractérisé en ce qu'on utilise du fil de cuivre comme fil-électrode (2).

20. Machine à souder par résistance à la molette comportant au moins un poste de déformation à froid, un fil-électrode (2) circulant tout d'abord sur un premier galet, puis sur un second galet faisant partie de deux galets de support d'électrodes (13, 15) pouvant être repoussés l'un contre l'autre, et des moyens de déformation à froid servant à accroître la résistance mécanique du fil et réduire la surface en coupe transversale du fil ainsi qu'à amener la section transversale du fil d'une forme sensiblement circulaire avant la pénétration du fil-électrode (2) dans le premier galet de support d'électrode (13), caractérisée par un dispositif d'étirage (3) constituant un premier poste de déformation et comprenant au moins une buse d'étirage (1), et par des moyens de laminage (6, 7, 8, 9, 10, 11) comportant des cylindres (6, 7) entraînés par un moteur (9) pour réaliser la déformation à froid dans un second poste de déformation.

21. Machine à souder selon la revendication 20, caractérisée en ce que les moyens de laminage comprennent un couple de cylindres (6, 7) ainsi que des moyens d'entraînement (8, 9, 10, 11) pour les deux cylindres (6, 7) de couples de cylindres, et que les moyens d'entraînement comprennent un moteur (9) et des moyens de commande servant à commander la vitesse de rotation de ce moteur ainsi que des moyens (10) de transmission de force entre le moteur (9) et les deux cylindres (6, 7) et un mécanisme inverseur (8) monté dans la transmission de force entre l'un des deux cylindres (6) et le moteur (9).

22. Machine à souder selon la revendication 21, caractérisée en ce que pour l'obtention d'une tension prédéterminée du fil-électrode (2) après que ce dernier ait quitté les moyens de laminage (6, 7, 8, 9, 10, 11), il est prévu une unité (14) de mise en tension du fil comportant des moyens pour appliquer la tension au fil et des moyens pour mesurer l'écart de réglage entre la valeur réelle et la valeur de consigne de la tension du fil et des moyens pour transmettre l'écart de réglage en tant que grandeur de commande aux moyens de commande pour réaliser la commande de la vitesse de rotation du moteur (9) en vue de réaliser un réglage tel de la vitesse de rotation du moteur et par conséquent la vitesse de rotation des cylindres (6, 7) que l'écart de réglage devienne négligeable et que par conséquent la tension du fil devienne approximativement constante.

23. Machine à souder selon la revendication 22, caractérisée par des moyens de guidage du fil servant à réaliser un guidage du fil dans la zone des moyens de laminage (6, 7, 8, 9, 10, 11), tels que l'un (6) des cylindres (6, 7) entraînés par le moteur (9) est entouré sur une partie de son pourtour par le fil-électrode (2) et que de ce fait au moins une partie de la force de traction nécessaire pour l'étirage réalisé dans le premier étage de déformation est transmise au fil.

24. Machine à souder selon l'une des revendications 20 à 23, caractérisée par un frein (4) pour le fil, disposé dans la zone comprise entre la réserve de fil (5) et le premier étage de déformation (3).

25. Machine à souder selon l'une des revendications 20 à 24, caractérisée par un accumulateur de fil servant à stocker la réserve de fil (5) et réalisé de préférence sous la forme d'un récipient en forme de pot comportant une cavité annulaire servant à loger le fil ou bien une bobine horizontale comportant des potences pivotantes servant de moyens de dévidage.

Fig. 1

Fig. 1A   Fig.1B   Fig. 1C   Fig. 1D

Fig. 2

Fig. 3

Fig.4A

Fig. 4B

Fig.4C